# EUROPÄISCHE PATENTSCHRIFT

(11) **EP 2 656 918 B1**
(45) Veröffentlichungstag und Bekanntmachung des Hinweises auf die Patenterteilung: **09.11.2016**
(21) Anmeldenummer: 12002984.8
(22) Anmeldetag: 27.04.2012
(51) Int. Cl.: B01L 9/00

(54) **Kit**
Kit
Kit

(43) Veröffentlichungstag der Anmeldung: 30.10.2013
(73) Patentinhaber: Eppendorf AG, 22339 Hamburg (DE)
(72) Erfinder: Lucke, Judith, 22765 Hamburg (DE); Kroog, Jens-Peter, 22927 Großhansdorf (DE); Knofe, Helmut, 22844 Norderstedt (DE)
(74) Vertreter: Hauck Patentanwaltspartnerschaft mbB

(56) Entgegenhaltungen:
- WO-A1-2007/121324
- DE-U1- 20 216 693
- GB-A- 2 472 252
- US-A1- 2005 265 901

## Beschreibung

Die Erfindung bezieht sich auf einen Kit (Zusammenstellung) umfassend verschiedene Reagenzien in verschiedenen Gefäßen.

Für die Durchführung zahlreicher Verfahren mittels Laborautomaten (Workstation) in chemischen, biochemischen, biologischen, medizinischen oder gerichtsmedizinischen Laboratorien werden Reagenzien benötigt, mit deren Hilfe Proben für eine Analyse vorbereitet werden. Ein Beispiel hierfür ist die Aufreinigung von Nukleinsäure mit Hilfe von Magnetpartikeln. Hierbei wird wiederholt Nukleinsäure in speziellen Reagenzien gelöst, an den Magnetpartikeln angelagert und von den Reagenzien getrennt.

Bei den herkömmlichen Verfahren werden die Reagenzien in der Regel von Hand auf die Arbeitsfläche der Laborautomaten gesetzt. Die Reagenzien selber werden in der Regel in Form einer ungeordneten Sammlung aus verschlossenen Gefäßen umhüllt von einem Kunststoffbeutel in einer Faltschachtel aus Karton ausgeliefert. Der Anwender muss die Gefäße öffnen und in bestimmten Haltevorrichtungen (Racks) in einer vorgegebenen Position auf der Arbeitsfläche einsetzen. Hierdurch wird gewährleistet, dass der Laborautomat bei der automatischen Durchführung des Verfahrens jeweils auf das richtige Reagenz zugreift. Die Steuerung des Laborautomaten geht nämlich davon aus, dass die benötigten Reagenzien an bestimmten Positionen der Arbeitsfläche bereitgestellt werden. Gegebenenfalls muss der Anwender die Inhalte von einzelnen Reagenzbehältern noch in spezielle Systemgefäßc umfüllen, die der Steuerung des Laborautomaten bekannt sind.

Die WO 2008/003338 A beschreibt ein modulares Aufbewahrungssystem für Labor-Flüssigkeiten mit einem Trägerrahmen mit einer bestimmten Anzahl Steckplätze für mindestens zwei verschiedene Laborgefäß-Einsätze, die sich beliebig gegeneinander austauschen und beliebig formschlüssig kombinierbar in die Steckplätze des Trägerrahmens einsetzen lassen und die jeweils mindestens ein Laborgefäß und/oder mindestens ein Steckfach für mindestens ein Laborgefaß aufweisen.

Die Positionierung der Gefäße mit den jeweils benötigten Reagenzien auf den vorgegebenen Stellen ist aufwendig. Hierdurch besteht eine erhöhte Vertauschungsgefahr. Bei Zwischenlagerung restlicher Reagenzien in Kühlschränken können leicht Ansammlungen von Gefäßen entstehen. Hierbei kann es ebenfalls zu Vertauschungen kommen, beispielsweise wenn Gefäße mit unterschiedlichem Anbruchsdatum verwechselt werden. Der Anwender hat somit einen erheblichen Ordnungsaufwand zu betreiben.

Nachteilig ist ferner, dass in den Gefäßen vielfach Restmengen der Reagenzien verbleiben, die der Laborautomat mit einer Pipette oder einem anderen Dosiergerät nicht entnehmen kann. Der Anwender muss häufiger Reagenzien nachfüllen und außerdem erhöht dies die Kosten.

Davon ausgehend liegt der Erfindung die Aufgabe zugrunde, einen Kit umfassend verschiedene Reagenzien in verschiedenen Gefäßen zur Verfügung zu stellen, der die Anwendung der Reagenzien in Laborautomaten erleichtert. Unter Erleichterung ist sowohl eine Reduktion der Verwechselungsgefahr von Reagenzien zu verstehen und/ oder auch die maximale Ausnutzung des Füllvolumens der mit Reagenzien befüllten Gefäße.

Die Aufgabe wird durch einen Kit mit den Merkmalen des Anspruches 1 gelöst. Vorteilhafte Ausgestaltungen des Kits sind in Unteransprüchen angegeben.

Der erfindungsgemäßc Kit umfasst einen Träger und auf dem Träger angeordnete Gefäße, wobei in verschiedenen Gefäßen verschiedene Reagenzien enthalten sind, der Träger an der Unterseite eine Standfläche zum Aufsetzen auf einen Untergrund aufweist und der Träger unten Positionierungsmittel zum Positionieren auf mindestens einem Arbeitsplatz eines Laborautomaten für Mikrotiterplatten gemäß dem SBS-Standard aufweist, die Gefäße mit einem öffenbaren Verschluss oben auf dem Träger angeordnet und die Gefäße von Haltemitteln des Trägers gehalten sind, wobei die Haltemittel mindestens ein Gefäß bei Anordnung des Trägers mit der Standfläche auf einem horizontalen Untergrund in einer zur Vertikalen geneigten Ausrichtung halten.

Bei dem erfindungsgemäßen Kit sind die Gefäße mit den Reagenzien auf einem Träger angeordnet, der direkt auf mindestens einem Arbeitsplatz für Mikrotiterplatten gemäß dem SBS-Standard in der Arbeitsfläche eines Laborautomaten positionierbar ist. Die Arbeitsplätze von Laborautomaten sind in der Regel auf das Format von Mikrotiterplatten gemäß dem SBS-Standard abgestimmt. Hierfür ist die Grundfläche der Arbeitsplätze an die äußeren Abmessungen der rechteckigen Basis (Footprint) von Mikrotiterplatten gemäß ANSI/SBS 1-2004: Mikroplates-Footprint Dimensions angepasst. Diese Abmessungen betragen 127,76 mm x 85,48 mm, wobei auch die Toleranzen standardisiert sind. Die Grundflächen dieser Arbeitsplätze sind durch Anschläge oder andere Positionierungsmittel der Arbeitsplätze begrenzt, die eine genaue Positionierung von Mikrotiterplatten sicherstellen. Bei den Laborautomaten vom Typ epMotion^{®} der Eppendorf AG sind die Arbeitsplätze rechtwinklig durch vier an ihren Ecken von der Arbeitsfläche hochstehende Positionierungselemente in Form von Stiften begrenzt. Vier Positionierungselemente sind fest mit der Arbeitsfläche verbunden und ein Positionierungselement ist in Richtung auf die diagonal gegenüberliegende Ecke beweglich gelagert und durch eine Feder zu der gegenüberliegenden Ecke hin vorgespannt. An der gegenüberliegenden Ecke sind zwei fest mit der Arbeitsfläche verbundene Positionierungselemente vorhanden. An den weiteren Ecken ist jeweils nur ein Positionierungselement vorhanden. Die Positionierungselemente liegen an den Ecken einer auf den Arbeitsplatz aufgesetzten Mikrotiterplatte an. Das bewegliche Positionierungselement erleichtert das Aufsetzen der Mikrotiterplatte auf und Abnehmen der Mikrotiterplatte von der Arbeitsfläche. Das bewegliche Positionierungselement drückt die Mikrotiterplatte gegen die feststehenden Positionierungselemente, so dass sie exakt auf der Arbeitsfläche positioniert ist.

Der Träger des Kits ist mit den darauf angeordneten Gefäßen direkt auf mindestens einem Arbeitsplatz positionierbar. Aufgrund der Anpassung seiner Positionierungsmittel an den SBS-Standard für Mikrotiterplatten ist eine genaue Positionierung leicht möglich. Der Benutzer muss lediglich die Deckel der Gefäße öffnen und den Träger mit den geöffneten Gefäßen mittels der Positionierungsmittel auf einem Arbeitsplatz anordnen. Der Steuerung des Laborautomaten ist der vorgesehene Arbeitsplatz für die Positionierung des Trägers mit den Reagenzien für die Durchführung eines bestimmten Verfahrens bekannt. Ferner ist der Steuerung des Laborautomaten die vorgesehene Anordnung der Gefäße mit den verschiedenen Reagenzien auf dem Träger bekannt. Der Laborautomat kann deshalb bei der Durchführung des Verfahrens anhand der bekannten Anordnung der Gefäße mit seiner Pipette oder einem anderen Dosiergerät von oben in die geöffneten Gefäße eintauchen und die jeweils benötigten Reagenzien in den entsprechenden Mengen direkt aus den Gefäßen entnehmen und in andere Gefäße hineingeben bzw. daraus entnehmen oder in anderer Weise verarbeiten. Nach nur teilweisem Verbrauch der Reagenzien eines Kits kann der Träger mit den Gefäßen von der Arbeitsfläche abgenommen und nach dem Verschließen der Gefäße in einem Kühlgerät aufbewahrt werden. Ist der Kit aufgebraucht, kann der Träger komplett mit den Gefäßen und Deckeln im Laborabfall entsorgt werden. Hierfür sind vorzugsweise der Träger und die Gefäße als preiswerte Einwegartikel (Disposable) ausgeführt.

Durch den erfindungsgemäßen Kit wird das Problem des Heraussuchens einzelner Gefäße mit speziellen Reagenzien und der genauen Positionierung der verschiedenen Gefäße überwunden. Der Anwender braucht lediglich die Gefäße zu öffnen und mit dem Träger auf dem Arbeitsplatz zu positionieren. Das Vertauschungsrisiko ist äußerst gering, da die Gefäße auf ihren vorgesehenen Plätzen auf dem Träger verbleiben können.

Mittels Pipetten und anderer Dosiergeräte können Flüssigkeiten aus Gefäßen nur bis zu einem bestimmten Flüssigkeitsstand entnommen werden, so dass stets Restmengen in den Gefäßen verbleiben. Herkömmlicherweise werden die Gefäße von den Haltevorrichtungen in senkrechter Ausrichtung auf der Arbeitsplatte eines Laborautomaten gehalten. Dies führt dazu, dass sich die Flüssigkeit gleichmäßig auf dem Gefäßboden oder um eine zentrale empor gerichtete Wölbung des Gefäßbodens verteilt. Infolgedessen sind die in den Gefäßen verbleibenden Restmengen verhältnismäßig groß. Bei dem erfindungsgemäßen Kit ist mindestens ein Gefäß von Haltemitteln des Trägers gehalten, die bei Anordnung des Trägers auf der horizontalen Arbeitsfläche eines Laborautomaten das Gefäß zur Vertikalen geneigt halten. Aufgrund der Neigung zur Vertikalen sammeln sich Restmengen der Flüssigkeit am tiefsten Punkt des geneigten Gefäßbodens und können dort weitgehend mittels einer Pipette oder einer anderen Dosiervorrichtung entnommen werden, die von oben in die geöffneten Gefäße eintaucht. Vorzugsweise weist der Träger viele oder ausschließlich Haltemittel auf, die bei Anordnung des Trägers auf einem horizontalen Untergrund die Gefäße schräg zur Vertikalen halten, um Reagenzien in möglichst vielen Gefäßen möglichst weitgehend zu nutzen. Es kann aber auch vorteilhaft sein, das der Träger nur ein einziges oder wenige derartige Haltemittel aufweist, von denen Gefäße mit besonders kostspieligen Reagenzien gehalten werden. Von den weiteren Haltemitteln können die Gefäße bei Anordnung des Trägers auf einer horizontalen Standfläche vertikal ausgerichtet sein. Hierdurch kann die Raumausnutzung des Trägers verbessert werden.

Gemäß einer bevorzugten Ausgestaltung sind die Positionierungsmittel des Trägers so ausgebildet, dass sie den Träger auf einem einzigen Arbeitsplatz positionieren. Hierfür wirken die Positionierungsmittel des Trägers mit den weiteren Positionierungsmitteln nur eines Arbeitsplatzes zusammen. Diese Ausgestaltung der Positionierungsmittel des Trägers ist bevorzugt, wenn die Grundfläche des Trägers der Grundfläche des Arbeitsplatzes entspricht oder diese gegebenenfalls geringfügig übersteigt, so dass der Träger nur einen einzigen Arbeitsplatz und gegebenenfalls die Abstandsbereiche zwischen diesem Arbeitsplatz und benachbarten Arbeitsplätzen besetzt. Die Positionierungsmittel des Trägers können auch dann so ausgebildet sein, dass sie nur mit den weiteren Positionierungsmitteln eines einzigen Arbeitsplatzes zusammenwirken, wenn die Grundfläche des Trägers so groß ist, dass er mehrere Arbeitsplätze auf einer Arbeitsfläche eines Laborautomaten besetzt. Falls die Abmessungen des Trägers so groß sind, dass er mehrere Arbeitsplätze besetzt, können die Positionierungsmittel des Trägers gemäß einer weiteren Ausgestaltung so ausgebildet sein, dass sie den Träger bezüglich mehrerer Arbeitsplätze positionieren. In diesem Falle wirken die Positionierungsmittel des Träger mit weiteren Positionierungsmitteln mehrerer Arbeitsplätze zusammen.

Gemäß einer Ausgestaltung sind die Positionierungsmittel des Trägers äußere Ränder einer Basis des Trägers, deren Abmessungen den Abmessungen mindestens eines Arbeitsplatzes eines Laborautomaten für eine Mikrotiterplatte gemäß SBS-Standard entsprechen. Falls die Positionierungsmittel nur mit den weiteren Positionierungsmitteln eines einzigen Arbeitsplatzes zusammenwirken, hat der Träger unten äußere Abmessungen, die den äußeren Abmessungen einer Mikrotiterplatte entsprechen. Diese Übereinstimmung der äußeren Abmessungen kann begrenzt sein auf die Bereiche des Trägers, die mit den weiteren Positionierungsmitteln der Arbeitsplätze zusammenwirken. Falls die weiteren Positionierungsmittel Stifte sind, die an den Ecken der Arbeitsplätze angeordnet sind, kann die Übereinstimmung der Abmessungen auf die Ecken des Trägers begrenzt sein. Bevorzugt hat jedoch der Träger am unteren Rand überall äußere Abmessungen, die den äußeren Abmessungen einer Mikrotiterplatte gemäß SBS-Standard entsprechen.

Falls die Positionierungsmittel des Trägers mit weiteren Positionierungsmitteln einer matrixartigen Anordnung von vier Arbeitsplätzen zusammenwirken, können die Positionierungsmittel an vier Ecken des Trägers ausgebildet sein, die den vier Stiften zugeordnet sind, welche die Ecken der Anordnung aus vier Arbeitsplätzen definieren. Zwischen den vier Ecken kann der Träger unten Ausnehmungen aufweisen, so dass er nicht mit Stiften an den äußeren Seiten der Anordnung aus vier Arbeitsplätzen kollidiert, die zwischen den Ecken dieser Anordnung angeordnet sind.

Gemäß einer anderen Ausgestaltung sind die Positionierungsmittel zumindest teilweise an einen von der Unterseite des Trägers vorstehenden Vorsprung ausgebildet. Beispielsweise hat der Träger an der Unterseite am äußeren Rand einen umlaufenden Sockel oder mehrere Füße, der oder die die Standfläche oder einen Teil der Standfläche des Trägers bilden. Innerhalb des umlaufenden Sockels bzw. der Füße steht beispielsweise ein rahmenartiger Vorsprung nach unten vor, dessen äußere Ränder die Positionierungsmittel des Trägers zum Positionieren an den weiteren Positionierungsmitteln mindestens eines Arbeitsplatzes bilden. Diese Ausgestaltung kann beispielsweise bei einem Träger gewählt werden, dessen Grundfläche die Grundfläche eines einzigen Arbeitsplatzes übersteigt. Gemäß einer weiteren Ausgestaltung sind die Positionierungsmittel des Trägers zu einem Teil von den äußeren Rändern einer Basis des Trägers und zu einem weiteren Teil von mindestens einem innerhalb der äußeren Ränder von der Unterseite des Trägers vorstehenden Vorsprung gebildet. Insbesondere ist es möglich, dass die Positionierungsmittel durch zwei benachbarte äußere Ränder der Basis des Trägers und einen innerhalb der äußeren Ränder von der Unterseite des Trägers vorstehenden Vorsprung gebildet sind. Dieser Träger kann mit den als Positionierungsmittel dienenden äußeren Rändern an weitere Positionierungsmittel des Arbeitsplatzes angesetzt werden, so dass das von dem Vorsprung auf der Unterseite gebildete Positionierungsmittel auf das entsprechende Positionierungsmittel des Arbeitsplatzes ausgerichtet wird. Dies erleichtert die Positionierung des Trägers auf einem Arbeitsplatz.

Gemäß einer bevorzugten Ausgestaltung sind die Gefäße von Haltemitteln des Trägers gehalten. Die Haltemittel sind bevorzugt so ausgebildet, dass sie die Gefäße mit dem öffenbaren Verschluss oben und an bestimmten Positionen auf dem Träger halten, sodass diese insbesondere beim Transport nicht umfallen. Die Haltemittel können so ausgebildet sein, dass sie sämtliche oder einen Teil der Gefäße vertikal ausgerichtet halten, wenn der Träger auf einen Untergrund aufgesetzt ist. Die Haltemittel sind so ausgebildet, dass sie sämtliche oder einen Teil der Gefäße zur Vertikalen geneigt ausgerichtet halten, wenn der Träger auf einen horizontalen Untergrund aufgesetzt ist.

Die Haltemittel können verschieden ausgebildet sein. Bevorzugt sind die Haltemittel Aufnahmen des Trägers, in die die Gefäße einsetzbar sind. Gemäß einer anderen Ausgestaltung sind die Haltemittel Stützmittel, welche die Gefäße abstützen. Beispielsweise umfasst der Träger einen plattenförmigen Lagerkörper und Stützmittel in Form einer Lochplatte, die von Abstandshaltern in einem Abstand von dem Grundkörper gehalten sind. Die Gefäße sind in Löcher der Lochplatte eingesetzt und sitzen mit ihrem Gefäßboden auf der Lochplatte auf.

Gemäß einer Ausgestaltung umfassen die Haltemittel mindestens eine Aufnahme des Trägers, in der ein Gefäß angeordnet ist, wobei in mindestens einer Aufnahme das Gefäß an mindestens einer Führungsfläche anliegt, die so ausgerichtet ist, dass das Gefäß bei Anordnung des Trägers mit der Standfläche auf einem horizontalen Untergrund zur Vertikalen geneigt ist. In der Aufnahme ist das Gefäß gefangen, so dass es nicht umfällt. Die Führungsfläche ist ein Boden und/oder eine Seitenwand der Aufnahme. Bevorzugt wird die Führungsfläche von einem Boden und von einer Seitenwand der Aufnahme gebildet. Die Führungsfläche kann eine zusammenhängende, ebene Fläche sein. Die Führungsfläche kann auch von mehreren Teilflächen gebildet sein, zwischen denen Lücken vorhanden sind.

Gemäß einer bevorzugten Ausgestaltung ist die Führungsfläche ein Boden der Aufnahme, der schräg zur Standfläche geneigt ist und auf dem das Gefäß aufsitzt. Wenn der Träger auf einem horizontalen Untergrund aufsitzt, ist der Boden zur Horizontalen geneigt, so dass das darauf aufsitzende Gefäß zur Vertikalen geneigt ist. Bevorzugt bildet eine Scitenwand der Aufnahme eine weitere Führungsfläche, welche das Gefäß seitlich abstützt.

Gemäß einer weiteren Ausgestaltung liegt das Gefäß in der Aufnahme mit dem geneigten Boden an einer oberen Öffnung auf einer Seite an einem Seitenwandabschnitt der Aufnahme an und auf der gegenüberliegenden Seite nicht, so dass ein Betrachter durch die obere Öffnung der Aufnahme hindurch eine Kennzeichnung auf der Seite des Gefäßes betrachten kann. Zwischen dem geneigten Gefäß und dem Träger verbleibt im Bereich der oberen Öffnung ein Freiraum, durch den hindurch ein Betrachter auf die Seite des Gefäßes blicken kann. Dies ermöglicht dem Betrachter, die Kennzeichnung auf der Seite des Gefäßes zu lesen, um zu überprüfen, ob das Gefäß die Position auf dem Träger einnimmt, von der die Steuerung des Laborautomaten ausgeht. Trotz des Freiraumes zwischen Gefäß und Aufnahme ist das Gefäß aufgrund der Neigung des Bodens in einer stabilen Lage in der Aufnahme gehalten.

Gemäß einer weiteren Ausgestaltung erweitert sich der Querschnitt der Aufnahme mit dem geneigten Boden nach oben zu der Öffnung der Aufnahme hin. Hierdurch wird das Ablesen einer Kennzeichnung erleichtert. Zudem ist die Erweiterung des Querschnittes der Aufnahme nach oben fertigungstechnisch vorteilhaft, da es ein Spritzgießen des Trägers mittels eines zweiteiligen Werkzeuges begünstigt

Gemäß einer weiteren Ausgestaltung weist der Träger eine obere Wand und von der oberen Wand nach unter vorstehende Behälter auf, wobei in der oberen Wand die Öffnungen der Aufnahmen und in den Behältern die Aufnahmen ausgebildet sind. Diese Ausführung ist materialsparend und vorteilhaft in der Herstellung.

Gemäß einer weiteren Ausgestaltung ist die Standfläche an der Unterseite von Böden der Aufnahmen ausgebildet. Hierdurch wird ebenfalls Material eingespart und der Fertigungsaufwand verringert. Bei einer anderen Ausgestaltung ist die Standfläche vom unteren Rand eines Rahmens gebildet, der vom Rand der oberen Wand nach unten vorsteht. Bei einer anderen Ausgestaltung ist die Standfläche von den unteren Enden von Füßen gebildet, die von der oberen Wand nach unten vorstehen.

Gemäß einer weiteren Ausgestaltung stehen die Behälter von der oberen Wand unterschiedlich weit nach unten vor und bilden die am weitesten nach unten vorstehenden Behälter mit der Unterseite ihrer Böden die Standfläche. Behälter mit kleinen Aufnahmen für kleine Gefäße können weniger weit nach unten vorstehen als Behälter mit Aufnahmen für große Gefäße. Hierdurch wird ebenfalls Material eingespart.

Gemäß einer weiteren Ausgestaltung weist die Aufnahme mit dem geneigten Boden zwei voneinander beabstandete geneigte Bodenabschnitte und dazwischen einen mit der Unterseite einen Abschnitt der Standfläche bildenden Bodenabschnitt auf. Dies ermöglicht die Ausbildung der Standfläche an einem Abschnitt eines geneigten Bodens. Durch die voneinander beabstandeten geneigten Bodenflächen wird sichergestellt, dass das Gefäß in der Aufnahme nicht umkippt, auch wenn sich diese nach oben erweitert.

Gemäß einer Ausgestaltung hat der Träger einen die Gefäß tragenden Grundkörper und einen den Grundkörper haltenden Adapter mit der Standfläche an der Unterseite oder ist der Träger ein die Gefäße tragender Grundkörper mit der Standfläche an der Unterseite. Bei der ersten Variante ist der Adapter mit der Standfläche auf der Arbeitsfläche des Laborautomaten positionierbar. Der Adapter hält den Grundkörper, der die Gefäße trägt. Der Adapter kann dazu dienen, die Gefäße auf einem Niveau zu positionieren, das von einer Pipette oder einer anderen Dosiereinrichtung des Laborautomaten angefahren werden kann. Bevorzugt hat bei dieser Ausgestaltung der Grundkörper an der Unterseite eine eigene Standfläche, die dazu genutzt werden kann, den Grundkörper ohne den Adapter auf einen Untergrund aufzusetzen. Bevorzugt ist die Standfläche des Grundkörpers parallel zur Standfläche des Adapters ausgerichtet, sodass mindestens ein Gefäß auch dann zur Vertikalen geneigt ausgerichtet ist, wenn der Grundkörper mit seiner Standfläche auf einen Untergrund aufgesetzt wird.

Bei der zweiten Variante ist der Träger ein Grundkörper, der die Gefäße trägt und die Standfläche aufweist. Der Grundkörper ist direkt auf der Arbeitsfläche positionierbar. Ein Adapter entfällt.

Gemäß einer weiteren Ausgestaltung des Kits umfasst der Träger einen die Haltemittel aufweisenden Grundkörper und einen den Grundkörper haltenden Adapter mit der Standfläche an der Unterseite oder ist der Träger ein die Haltemittel aufweisender Grundkörper mit der Standfläche an der Unterseite. Bei der ersten Variante weist der Grundkörper bevorzugt mindestens ein Haltemittel auf, das ein Gefäß bei Anordnung der Standfläche des Grundkörpers auf einem horizontalen Untergrund zur Vertikalen geneigt hält. Es ist aber auch möglich, dass der Grundkörper ausschließlich Haltemittel aufweist, die die Gefäße bei Anordnung des Grundkörpers mit seiner Standfläche auf einem horizontalen Untergrund vertikal ausgerichtet halten. Die Neigung der Gefäße zur Standfläche des Adapters kann bei dieser Ausgestaltung dadurch bewirkt werden, dass der Adapter den Grundkörper in geneigter Ausrichtung zur Standfläche des Adapters hält.

Bei einer Ausgestaltung weist der Adapter einen Rahmen mit der Standfläche an der Unterseite eines Unterteiles und einem oberhalb des Unterteiles seitlich auskragenden Oberteil zur Aufnahme des Grundkörpers auf und/oder weist der Grundkörper ein Unterteil mit der Standfläche an der Unterseite und einem oberhalb des Unterteils seitlich auskragenden Oberteil zur Aufnahme der Gefäße auf. Gemäß einer weiteren Ausgestaltung sind die äußeren Ränder des Unterteils die Positionierungsmittel. Diese Ausgestaltungen ermöglichen eine Ausnutzung von Abstandsbereichen zwischen Arbeitsplätzen eines Laborautomaten durch Träger, auf denen mehr bzw. größere Gefäße angeordnet sind. Bei der ersten Variante ermöglicht der Adapter die Verwendung eines Grundkörpers, dessen Grundfläche die Grundfläche des Adapters überschreitet. Bei der zweiten Variante nimmt der Grundkörper die Gefäße in einem Oberteil auf, wobei das Oberteil einen Querschnitt aufweist, der größer als die Standfläche des Grundkörpers ist.

Bei einer weiteren Ausgestaltung weist der Adapter zwei ebene, einander gegenüberliegende Gehäusewände auf, die sich jeweils über die gesamte Höhe des Unterteils und des Oberteils hinweg erstrecken, weist der Adapter im Bereich des Unterteils an den beiden Rändern der Gehäusewände jeweils zwei senkrecht zur gegenüberliegenden Seitenwand hin ausgerichtete Gehäusewandabschnitte auf, sind im Bereich des Oberteils die beiden einander gegenüberliegenden Gehäusewände oberhalb der abgewinkelten Gehäusewandabschnitte nach außen vorspringend und an ihren seitlichen Rändern über weitere Gehäusewände miteinander verbunden. Dieser Adapter ermöglicht die Verwendung von Grundkörpern mit einer Grundfläche, welche die Grundfläche des Unterteils übersteigt. Die konstruktive Ausführung dieses Adapters ist besonders einfach.

Gemäß einer weiteren Ausgestaltung weisen die Gefäße auf einem Gefäßkörper und/oder auf einem Gefäßdeckel Kennzeichnungen auf und sind auf einer oberen Wand des Trägers neben darin ausgebildeten Öffnungen der Aufnahmen entsprechende Kennzeichnungen angeordnet. Dies ermöglicht dem Anwender eine Überprüfung, ob die Gefäße an den ihnen zugedachten Positionen angeordnet sind, von denen die Steuerung des Laborautomaten ausgeht. Gegebenenfalls kann der Anwender anhand der Kennzeichnungen die Gefäße richtig positionieren. Die Kennzeichnungen auf den Gefäßdeckeln erleichtern eine Zuordnung der Gefäßdeckel zu den Gefäßen, wenn diese wieder verschlossen und zwischengelagert werden sollen. Die Kennzeichnungen auf den Gcfäßkörpern erleichtern eine Zuordnung der Gefäße zu den Aufnahmen auch dann, wenn die Deckel abgenommen sind. Die Kennzeichnungen sind gemäß einer Ausgestaltung Farbcodes, Strichcodes, Nummerncodes oder eine Kombination von einem oder mehreren der vorbezeichneten Arten von Codes.

Gemäß einer weiteren Ausgestaltung weist eine obere Wand des Trägers mindestens eine mittels eines Sensors abtastbare weitere Kennzeichnung und/oder mindestens eine Fläche für eine Beschriftung und/oder ein Etikett auf. Die weitere Kennzeichnung kann insbesondere den Typ des Kits kennzeichnen. Der Laborautomat kann mit Hilfe eines Sensors die weitere Kennzeichnung abtasten und überprüfen, ob die für das durchzuführende Verfahren benötigten Reagenzien auf dem Arbeitsplatz angeordnet sind bzw. ob diese auf der vorgesehenen Position angeordnet sind. Falls der Laborautomat nicht die benötigten Reagenzien feststellt, kann der Laborautomat einen Warnhinweis ausgeben. Falls die Reagenzien nicht auf der vorgesehenen Position platziert sind, kann der Laborautomat ebenfalls einen Warnhinweis ausgeben oder das Verfahren modifizieren, so dass die Reagenzien auch in der von ihnen eingenommenen Position gemäß dem Verfahren verwendet werden. Eine fehlerhafte Positionierung auf dem richtigen Arbeitsplatz kann der Laborautomat erkennen, falls die Kennzeichnung an einer bestimmten Position bzw. in einer bestimmten Ausrichtung auf dem Träger angeordnet ist. Anhand der Position bzw. Ausrichtung der Kennzeichnung bezüglich des Trägers erkennt der Laborautomat, ob der Träger richtig auf dem betreffenden Arbeitsplatz positioniert ist. Die weitere Kennzeichnung ist gemäß einer Ausgestaltung durch ein oder mehrere Löcher in einer oberen Wand des Lagerkörpers gebildet. Gemäß einer bevorzugten Ausgestaltung weist die obere Wand an einer bestimmten Stelle eine Serie aus mehreren Löchern auf und ist auf der oberen Wand ein Etikett angeordnet, welches sämtliche oder nur einen Teil der Löcher bedeckt oder kein Loch bedeckt. Hierfür kann das Etikett oberhalb der Löcher weitere Löcher aufweisen. Die Codierung wird durch die Anzahl und Anordnung der nicht bedeckten bzw. bedeckten Löcher bestimmt. Diese Ausgestaltung ermöglicht eine besonders einfache Änderung der Codierung.

Die Fläche für die Beschriftung und/oder das Etikett auf dem Träger ist so bemessen, dass sie eine Beschriftung, Etikettierung oder anderweitige Kennzeichnung ermöglicht, die von einem normalsichtigen Anwender ohne Sehhilfe lesbar ist.

Gemäß einer weiteren Ausgestaltung ist der Träger mit und ohne darauf angeordneten Gefäßen an der Unterseite und an der Oberseite komplementär geformt, so dass mehrere Träger mit und ohne darauf angeordneten Gefäßen aufeinander stapelbar sind. Dies ermöglicht einen platzsparenden Transport und Lagerung von mehreren erfindungsgemäßen Kits.

Der Gefäßdeckel ist ein schraubbarer Deckel, ein aufklipsbarer Deckel und ein aufkaschierter Deckel aus einer Metallfolie oder einer anderen Folie. Ferner kann der Deckel ein durchsteckbarer Deckel sein. Die Gefäßsets können mit Deckeln der gleichen Art oder verschiedener Art ausgestattet sein.

Gemäß einer weiteren Ausgestaltung ist der Träger mit einem Deckel versehen. Der Deckel dient dem Schutz des Kits bzw. der Gefäße bei Einlagerung und Transport. Die Verbindung von Deckel und Träger ist bevorzugt so beschaffen, dass der Träger von Hand oder durch einen Greifer eines Laborautomaten abgenommen und aufgesetzt werden kann.

Gemäß einer weiteren Ausgestaltung umfasst der Kit eine Umverpackung, in der mindestens ein Träger mit darauf angeordneten Gefäßen ohne oder mit Deckel angeordnet ist. Die Umverpackung dient der Lagerung, dem Transport und dem Versand des Kits. Der Anwender kann den Träger mit den darauf angeordneten Gefäßen aus der Umverpackung entnehmen und auf dem Laborautomaten platzieren.

Gemäß einer weiteren Ausgestaltung umfasst der Kit einen Stapel aus Trägern mit darauf angeordneten Gefäßen und/oder einen Beutel mit darin enthaltenen Reaktionsgefäßen in einer Umverpackung. Die Anzahl der Träger und Gefäße und/oder der Reaktionsgefäße ist so bemessen, dass sie für die Durchführung einer vorgegebenen Anzahl von Untersuchungen ausreicht.

Gemäß einer weiteren Ausgestaltung ist der Grundkörper aus mindestens einem Kunststoff spritzgegossen oder aus mindestens einem Kunststoff und/oder einem anderen Material tiefgezogen oder mechanisch gefertigt.

Gemäß einer weiteren Ausgestaltung sind die Gefäße aus mindestens einem Kunststoff spritzgegossen und/oder aus mindestens einem Kunststoff im Blasformverfahren und/oder aus Glas hergestellt und/oder aus mindestens einem Kunststoff und/oder einem anderen Material tiefgezogen.

Gemäß einer weiteren Ausgestaltung ist der Adapter aus mindestens einem Kunststoff spritzgegossen oder aus mindestens einem Kunststoff oder einem anderen Material tiefgezogen oder mechanisch gefertigt.

Gemäß einer weiteren Ausgestaltung ist der Deckel aus mindestens einem Kunststoff spritzgegossen oder aus mindestens einem Kunststoff oder einem anderen Material tiefgezogen oder mechanisch gefertigt.

Gemäß einer weiteren Ausgestaltung ist die Umverpackung eine Faltschachtel aus Karton und/oder aus Wellpappe.

Gemäß einer weiteren Ausgestaltung ist der Kunststoff für den Träger und/oder den Deckel und/oder die Gefäße aus Polypropylen.

Gemäß einer weiteren Ausgestaltung ist das Material des Adapters Aluminium oder ein anderes Metall.

Ferner betrifft die Erfindung einen Träger gemäß Anspruch 22 und die Verwendung eines Trägers oder Kits gemäß Anspruch 23.

Die Erfindung wird nachfolgend anhand der anliegenden Zeichnungen eines Ausführungsbeispieles näher erläutert. In den Zeichnungen zeigen:
- Fig. 1: einen Grundkörper eines Trägers in der Draufsicht;
- Fig. 2: den Grundkörper eines Trägers in einem Vertikalschnitt entlang der Linie II-II von Fig. 1;
- Fig. 3: den Grundkörper eines Trägers in einem Vertikalschnitt entlang der Linie III-III von Fig. 1;
- Fig. 4: den Grundkörper eines Trägers in einem Vertikalschnitt entlang der Linie IV-IV von Fig. 1;
- Fig. 5: den Grundkörper eines Trägers in einem Vertikalschnitt entlang der Linie V-V von Fig. 1;
- Fig. 6: zwei übereinandergestapelte Grundkörper eines Trägers in einer Vorderansicht;
- Fig. 7: die übereinandergestapelten Grundkörper eines Trägers in einem Vertikalschnitt VII-VII von Fig. 6;
- Fig. 8: die übereinandergestapelten Grundkörper eines Trägers in einer Seitenansicht;
- Fig. 9: zwei mit Gefäßen befüllte Grundkörper eines Trägers übereinandergestapelt in der Vorderansicht;
- Fig. 10: ein mit Gefäßen bestückter Grundkörper eines Trägers in der Draufsicht;
- Fig. 11: die mit Gefäßen bestückten, übereinandergestapelten Grundkörper eines Trägers in einem Schnitt entlang der Linie XI-XI von Fig. 9;
- Fig. 12: die mit Gefäßen bestückten, übereinandergestapelten Grundkörper eines Trägers in einer Seitenansicht;
- Fig. 13: ein mit Gefäßen ohne Gefäßdeckel bestückter Grundkörper eines Trägers in einer Draufsicht;
- Fig. 14: einen Träger umfassend einen mit Gefäßen bestückten Grundkörper und einen Adapter in einer Vorderansicht,
- Fig. 15: der mit Gefäßen bestückte Träger in einer Seitenansicht; Gefäßdeckel
- Fig. 16: der mit Gefäßen ohne bestückte Träger in einem Schnitt entlang der Linie XVI-XVI von Fig. 4;
- Fig. 17: der mit Gefäßen ohne Gefäßdeckel bestückte Träger in einem Schnitt entlang der Linie XVII-XVII von Fig. 14;
- Fig. 18: der mit Gefäßen ohne Gefäßdeckel bestückte Träger in einem Schnitt entlang der Linie XVIII-XVIII von Fig. 14;
- Fig. 19: der mit Gefäßen ohne Gefäßdeckel bestückte Träger in einem Schnitt entlang der Linie XIX-XIX von Fig. 14;
- Fig. 20: der mit Gefäßen ohne Gefäßdeckel bestückte Träger auf dem Arbeitsplatz eines Laborautomaten;
- Fig. 21: Eintauchen der Pipettenspitze in ein geneigtes Gefäß in einem Vertikalschnitt;
- Fig. 22: Eintauchen der Pipettenspitze in ein anderes geneigtes Gefäß in einem Vertikalschnitt;
- Fig. 23: Eintauchen einer Pipettenspitze in ein vertikal ausgerichtetes Gefäß mit hoch gewölbtem Boden in einem Vertikalschnitt;
- Fig. 24: Eintauchen einer Pipettenspitze in ein vertikal ausgerichtetes Gefäß mit nach unten gewölbtem Boden in einem Vertikalschnitt;
- Fig. 25: zwei Stapel mit Gefäßen bestückter Grundkörper mit zwei Beuteln enthaltend lecre Reaklionsgefäße dazwischen in einer Umverpackung aus Karton bei geöffnetem Deckel in einem Vertikalschnitt;
- Fig. 26: die Anordnung von Fig. 25 in einer Perspektivansicht schräg von oben und von der Seite.

Bei der vorliegenden Anmeldung beziehen sich die Angaben "oben" und "unten" und sonstige Lageangaben auf eine Anordnung des Trägers mit der Standfläche auf einem horizontalen Untergrund.

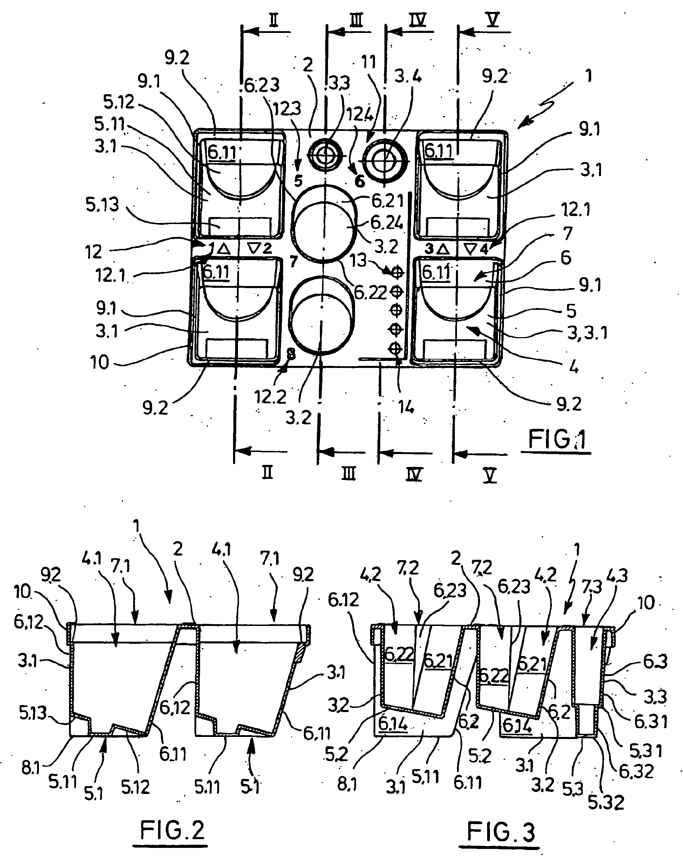

Gemäß Fig. 1 bis 5 weist ein Grundkörper 1 eine rechteckige obere Wand 2 auf, von deren Unterseite Behälter 3 mit jeweils einer Aufnahme 4 für Gefäße vorstehen. Die Behälter 3 haben jeweils einen Boden 5 und eine sich vom Boden bis zur oberen Wand erstreckende Seitenwand 6. In der oberen Wand 2 haben die Behälter 3 jeweils eine obere Öffnung 7. Jede Aufnahme 4 ist durch die obere Öffnung 7 von außen zugänglich.

Der Grundkörper 1 weist vier verschiedene Arten Behälter 3 und Aufnahmen 4 auf. An den vier Ecken des Grundkörpers ist jeweils ein Behälter 3.1 mit einer Aufnahme 4.1, einem rechteckigen Boden 5.1 einer Seitenwand 6.1 und einer oberen Öffnung 7.1 angeordnet. Die Behälter 3.1 stehen am weitesten von der oberen Wand 2 nach unten vor. Die Behälter 3.1 sind jeweils im Querschnitt rechteckig, wobei sich der Querschnitt von unten nach oben erweitert.
Die Behälter 3.1 haben jeweils Bodenabschnitte 5.11 des Bodens 5.1, die parallel zur oberen Wand 2 ausgerichtet sind und deren Unterseiten gemeinsam zu einer Standfläche 8.1 des Grundkörpers 1 gehören.

Ferner hat jeder Behälter 3.1 zwei spitzwinklig zur Standfläche 8 geneigte ebene Bodcnabschnittc 5.12, 5.13. Die geneigten Bodenabschnitte 5.12, 5.13 sind durch einen Teil des parallel zur oberen Wand 2 erstreckten Bodenabschnittes 5.11 voneinander getrennt.

Die geneigten Bodenabschnitte 5.12, 5.13 der Behälter 3.1 sind in einem zu den kurzen Seiten der oberen Wand 2 parallelen Vertikalschnitt geneigt. Die geneigten Bodenabschnitte 5.12, 5.13 jedes Behälters 3.1 sind in einer gemeinsamen Ebene angeordnet. Die geneigten Bodenabschnitte 5.12, 5.13 sämtlicher Behälter 3.1 sind parallel zueinander ausgerichtet.

Gemäß Fig. 1 ist der parallel zur oberen Wand 2 erstreckte Bodenabschnitt 5.11 des Bodens 5 auf der einen Seite durch den in der Draufsicht halbkreisförmigen geneigten Bodenabschnitt 5.12 und auf der anderen Seite durch den in der Draufsicht rechteckigen geneigten Bodenabschnitt 5.13 begrenzt ist. Der halbkreisförmige Bodenabschnitt 5.12 ist gemäß Fig. 2 näher an der Standfläche 8.1 als der rechteckige Bodenabschnitt 5.13 angeordnet.

Jeder Behälter 3.1 hat einen Seitenwandabschnitt 6.11, der spitzwinklig zu der oberen Wand 2 geneigt und rechtwinklig zu den geneigten Bodenabschnitten 5.12, 5.13 ausgerichtet ist. Die spitzwinklig zur oberen Wand 2 geneigten Seitenwandabschnitte 6.11 sämtlicher Behälter 3.1 sind parallel zueinander.

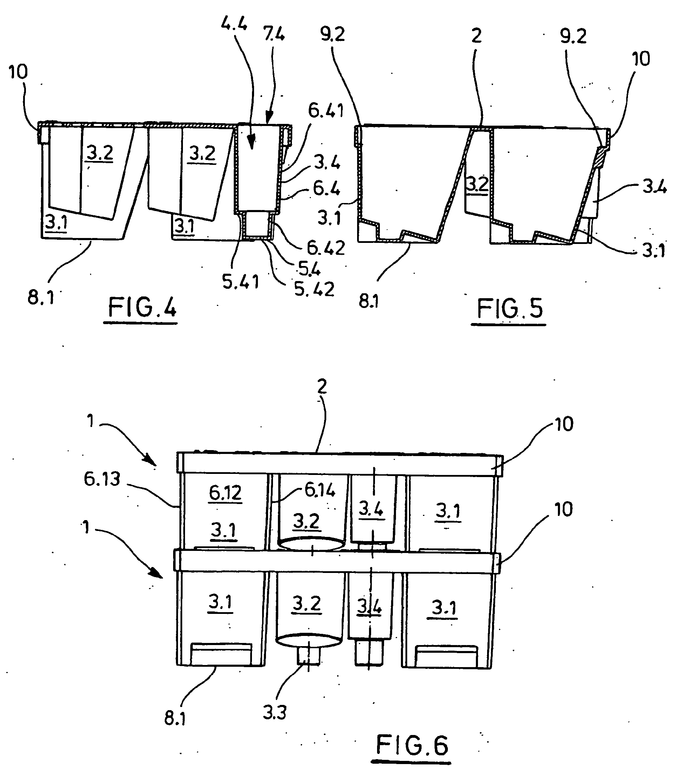

Die übrigen Seitenwandabschnitte 6.12, 6.13, 6.14 jedes Behälters 3.1 sind annähernd senkrecht zur oberen Wand des Grundkörpers ausgerichtet. Die beiden Seitenwandabschnitte 6.13, 6.14 der Behälter 3.1 sind jeweils geringfügig aufeinander zu geneigt, so dass der Abstand voneinander mit zunehmendem Abstand von der oberen Wand 2 geringfügig abnimmt. Dies ist in Fig. 6 gezeigt.

Neben der oberen Öffnung 7.1 haben die Behälter 3.1 jeweils angrenzend an die kurze Seite und die lange Seite der oberen Wand einen kleinen Absatz 9.1, 9.2, der in den Fig. 1, 2 und 5 gezeigt ist

Die obere Wand 2 ist an den Rändern durch eine etwas nach unten vorstehende Einfassung 10 begrenzt und stabilisiert. Im Bereich der Behälter 3.1 ist die Einfassung 10 oberhalb der Absätze 9.1, 9.2 durch die oberen, vertikal nach oben gerichteten Randbereiche der Seitenwandabschnitte 6.11 bis 6.14 der Behälter 3.1 gebildet.

Im Abstandsbereich 11 zwischen den beiden Paaren Behältern 3.1 sind nebeneinander zwei Behälter 3.2 mit einer Aufnahme 4.2 und einer oberen Öffnung 7.2 angeordnet. Diese Behälter 3.2 stehen weniger weit von der oberen Wand 2 nach unten vor als die Behälter 3.1. Sie sind parallel zu der schmalen Seite der oberen Wand 2 nebeneinander angeordnet. Sie haben einen kreisrunden ebenen Boden 5.2, der insgesamt schräg zur Standfläche 8.1 geneigt ist.

Die geneigten Böden 5.2 sämtlicher Behälter 3.2 sind parallel zueinander ausgerichtet. Die Böden 5.2 sind in einem zu den kurzen Seiten der oberen Wand 2 parallelen Vertikalschnitt geneigt.

Die Behälter 3.2 haben jeweils eine Seitenwand 6.2, mit einem halbkreiszylindrischcn Seitenwandabschnitt 6.21, der gemäß Fig. 3 und 4 senkrecht bezüglich des Bodens 5.2 ausgerichtet ist und 4 spitzwinklig zur oberen Wand 2 ausgerichtet ist. Ferner weist die Seitenwand 6.2 jedes Behälters 3.2 einen weiteren halbkreiszylindrischen Seitenwandabschnitt 6.22 auf, der senkrecht bezüglich der oberen Wand 2 ausgerichtet ist und gemäß Fig. 3 und Fig. 4 stumpfwinklig auf den Boden 5.2 trifft. Die Achsen der halbkreiszylindrischen Seitenwandabschnitte 6.21, 6.22 sind in einem parallel zu den kurzen Seiten der oberen Wand 2 verlaufenden Vertikalschnitt angeordnet.

Die beiden halbkreiszylindrischen Seitenwandabschnitte 6.21, 6.22 der Behälter 3.2 sind durch ebene Seitenwandabschnitte 6.23, 6.24 miteinander verbunden, deren Breite von unten nach oben zunimmt und die senkrecht zur oberen Wand 2 und parallel zu den Schmalseiten der oberen Wand 2 ausgerichtet sind. Gemäß Fig. 3 sind diese Scitenwandabschnitte 6.23, 6.24 im Wesentlichen dreiecksförmig. Somit nimmt der Querschnitt der Behälter 3.2 von unten nach oben zu.

Ferner sind im Abstandsbereich 11 zwischen den beiden Paaren Behälter 3.1 neben einer langen Seite der oberen Wand 2 die Behälter 3.3, 3.4 mit Aufnahmen 4.3,4.4, Böden 5.3, 5.4, Seitenwänden 6.3, 6.4 und oberen Öffnungen 7.3, 7.4 angeordnet. Die Behälter 3.3, 3.4 sind kreiszylindrisch, wobei die Zylinderachse senkrecht zur oberen Wand 2 ausgerichtet ist.

Die Behälter 3.3, 3.4 haben am unteren Ende eines oberen Seitenwandabschnittes 6.31, 6.41 jeweils einen oberen Bodenabschnitt 5.31, 5.41, der parallel zur oberen Wand 2 ausgerichtet ist. In dem oberen Bodenabschnitt 5.31, 5.41 mündet jeweils ein unterer hohlzylindrischer Seitenwandabschnitt 6.32, 6.42, der unten durch einen unteren Bodenabschnitt 5.32, 5.42 verschlossen ist. Die Unterseiten der unteren Bodenabschnitte 5.32, 5.42 sind jeweils Bestandteil der Standfläche 8.1 des Grundkörpers 1.

Der Behälter 3.3 hat einen kleineren Querschnitt als der Behälter 3.4.

Neben jedem Behälter 3.1 bis 3.4 ist eine Kennzeichnung 12 in Form einer Ziffer vorhanden. Die Kennzeichnungen 12.1 der Behälter 3.1 sind jeweils zwischen zwei benachbarten Behältern 3.1 angeordnet, wobei durch einen neben der Ziffer angeordneten Pfeil angezeigt wird, für welchen Behälter 3.1 die jeweilige Ziffer gilt.

Ferner sind in der oberen Wand für eine weitere Kennzeichnung 13 eine Serie von Löchern 14 angeordnet. Die Serie von Löchern 14 ist parallel zur kurzen Seite der oberen Wand 2 ausgerichtet.

Der Grundkörper 1 ist einteilig durch Spritzgießen aus einem Kunststoff hergestellt. Der Kunststoff ist beispielsweise Polypropylen.

Gemäß Fig. 2 bis 5 ist der Grundkörper 1 auf einen horizontalen Untergrund aufsetzbar, wobei die Standfläche 8.1 an der Unterseite der Bodenabschnitte 5.1, 5.32,5.42 der Gefäße 3.1,3.3,3.4 auf dem horizontalen Untergrund aufsitzt.

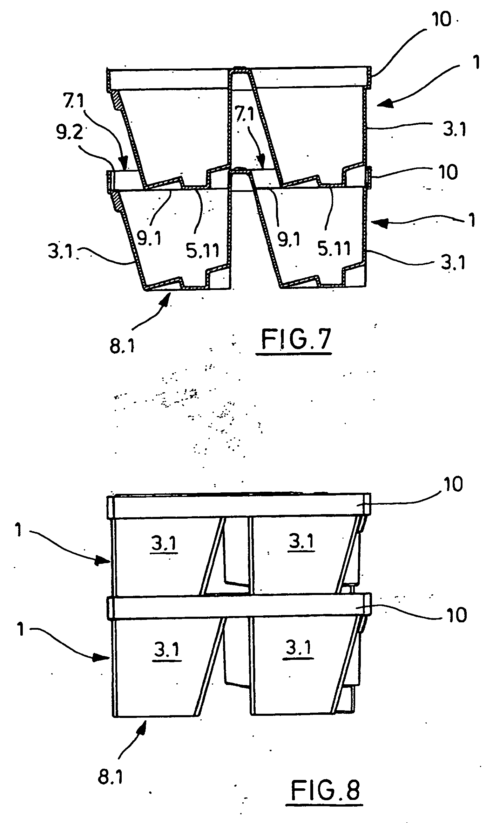

Gemäß Fig. 6 bis 8 sind zwei oder mehr identische Grundkörper 1 übereinander stapelbar. Hierbei sitzen die Bodenabschnitte 5.11 der Behälter 3.1 des oberen Grundkörpers 1 auf den Absätzen 9.1, 9.2 unterhalb der oberen Öffnungen 7.1 der Behälter 3.1 des unteren Grundkörpers 1 auf. Durch das Eingreifen der Behälter 3.1 des oberen Grundkörpers 1 in die oberen Öffnungen 7.1 der Behälter 3.1 des unteren Grundkörpers 1 wird eine horizontale Verlagerung der Grundkörper 1 relativ zueinander verhindert.

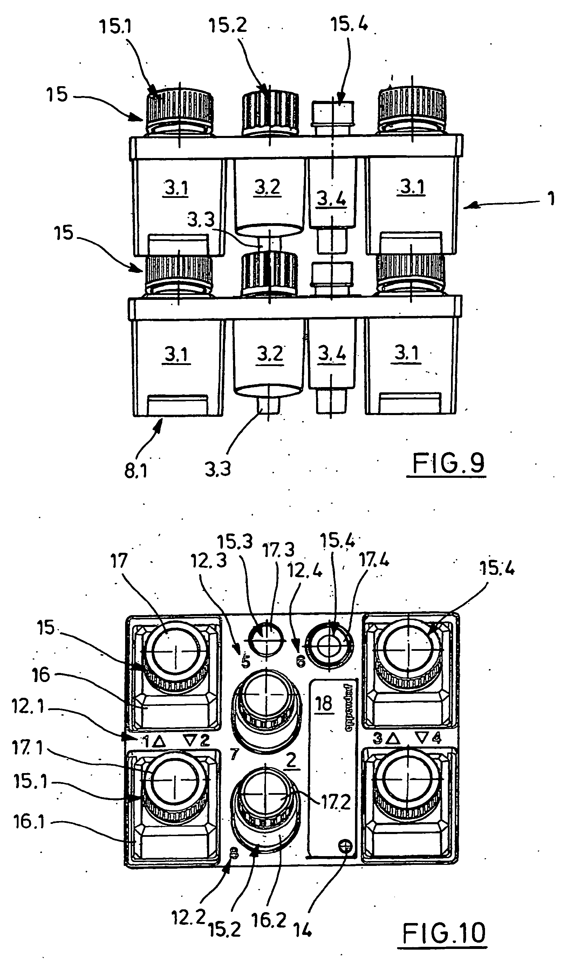

Gemäß Fig. 9 bis 12 sind Gefäße 15 in die Aufnahmen 4 des Grundkörpers 1 eingesetzt. Hierbei handelt es sich um Gefäße 15 oder Fläschchen, die einen Gefäßkörper 16 und einen schraubbaren Gefäßdeckel 17 aufweisen. Es sind vier verschiedene Typen Gefäße 15.1 bis 15.4 vorhanden, wobei zumindest ein Teil der Gefäße 15 verschiedene Reagenzien enthält.

Statt der Gefäße 15.3, 15.4 mit schraubbarem Gefäßdeckel 17.3, 17.4 sind in die Aufnahmen 4.3, 4.4 Reaktionsgefäße mit einem Gefäßdeckel in Form eines eingepressten Stopfens einsetzbar, wobei der Gefäßdeckel über eine integrierte Deckelhalterung mit dem Gefäßkörper verbunden sein kann. Die integrierte Deckelhalterung ist beispielsweise eine angespritzte flexible Lasche, die Gefäßdeckel und Gefäßkörper einteilig miteinander verbindet. Zum Halten des Gefäßdeckels in geöffneter Stellung ist der Grundkörper 1 gemäß einer Ausgestaltung mit einer Halterung versehen, wie sie in der WO 2008/003338 A1 anhand Fig. 9, Position 44 beschrieben ist. Die diesbezüglichen Ausführungen in der WO 2008/003338 A1 sind durch Bezugnahme in die vorliegende Anmeldung einbezogen. Bei einem solchermaßen ausgestalteten Grundkörper 1 wird das Reaktionsgefäß von oben in den Grundkörper 1 eingesteckt Für den Transport ist das Gefäß mit dem am Gefäß angespritzten Deckel verschlossen. Möchte der Nutzer das Gefäß öffnen, so kann er das Gefäß leicht anheben, den Deckel öffnen, das Gefäß zurück in die Öffnung schieben und dabei den Deckel in die angespritzte Deckelhalterung einfädeln. Dadurch steht der Deckel senkrecht nach oben und ist somit zur Entnahme von Flüssigkeit aus dem Gefäß im Automaten nicht im Weg.

In die Behälter 3.1 sind Gefäße 15.1 mit einem Gefäßkörper 16.1 eingesetzt, der in einem Querschnitt rechteckig ist. Die Behälter 3.2 bis 3.4 nehmen Gefäße 15.2 bis 15.4 auf, deren Gefäßkörper 16.1 bis 16.4 im Querschnitt kreisförmig ist.

Die Bodenabschnitte 5.12, 5.13 und der Boden 5.2 sowie die Seitenwandabschnitte 6.11, 6.21 sind Fübrungsflächen, welche die Gefäße 15.1, 15.2 ausrichten. Die Gefäße 15.1, 15.2 sitzen jeweils auf den Bodenabschnitten 5.12, 5.13 bzw. dem Boden 5.2 auf und liegen an einem Seitcnwandabschnitt 6.11 bzw. 6.21 der Aufnahmen 4.1, 4.2 an. Hierdurch sind die Gefäße 15.1, 15.2 in den Behältern 3.1 und 3.2 zur Vertikalen geneigt angeordnet, wenn der Grundkörper 1 mit seiner Standfläche 8.1 auf einem horizontalen Untergrund aufsitzt, wie in den Figuren 9 bis 12 gezeigt.

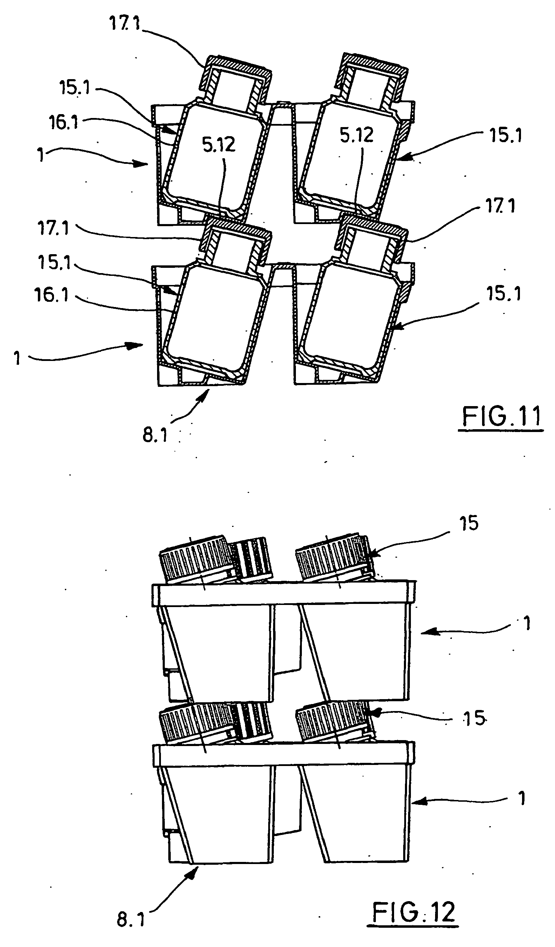

Dadurch, dass der Querschnitt der Aufnahmen 4.1, 4.2 sich von unten nach oben erweitert, kann ein Betrachter von oben auf die Seite der Gefäßkörper 16.1, 16.2 blicken. Dies wird insbesondere in Fig. 10 und 11 deutlich.

Die Gefäße 15.3, 15.4 sind in den Aufnahmen 4.3, 4.4 der Behälter 3.3, 4.4 von den Bodenabschnitten 5.31, 5.41 und den Seitenwandabschnitten 6.31, 6.41 vertikal ausgerichtet gehalten.

Der Abstandsbereich 11 zwischen den beiden Paaren Behälter 3.1 trägt gemäß Fig. 10 ein Etikett 18, das nur eines der Löcher 14 des Grundkörpers 1 freilässt und die übrigen Löcher 14 abdeckt. Hierdurch ist die Anordnung aus Grundkörper 1 und Gefäßen 15 codiert.

Die Gefäße 15 tragen auf den Seiten des Gefäßkörpers 16.1 bis 16.4 und oben auf dem Gefäßdeckel 17.1 bis 17.4 jeweils eine Kennzeichnung, die der Kennzeichnung 12.1 bis 12.4 auf der oberen Wand 2 neben dem Behälter 3.1 bis 3.4 entspricht, der das jeweilige Gefäß 15 aufnimmt. Die Kennzeichnungen der Gefäße 15 sind in den Abbildungen nicht gezeigt.

Mehrere mit Gefäßen 15 bestückte Grundkörper 1 sind übereinander gestapelt. Hierbei ruht der obere Grundkörper 1 mit den Unterseite der halbkreisförmigen, geneigten Bodenabschnitte 5.12 auf den Gefäßdeckeln 17.1 der Gefäße 15.1 in dem darunter angeordneten Grundkörper 1.

Durch das Anliegen der Gefäßdeckel 17.1 an geneigten Bodenabschnitten 5.12 und den Flanken benachbarter Bodenabschnitte 5.11 des oberen Grundkörpers 1 sind die Grundkörper 1 gegen Verlagerung in Horizontalrichtung relativ zueinander gesichert.

Der Anwender bezieht die mit Gefäßen 15 bestückten Grundkörper 1 in gestapelter oder ungestapelter Anordnung.

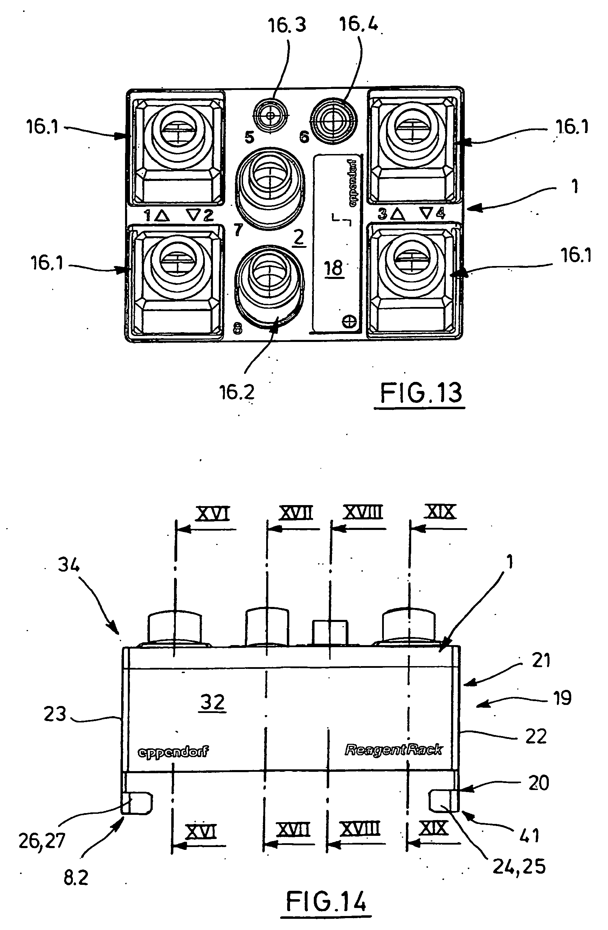

Gemäß Fig. 13 kann der Anwender die Gefäßdeckel 17.1 bis 17.4 von den Gefäßen 15.1 bis 15.4 abnehmen, bevor er Reagenzien entnimmt.

Wenn der Anwender keinen Laborautomaten verwendet, kann er den Lagerkörper mit seiner Standfläche 8.1 auf einem ebenen Untergrund absetzen und mittels einer Pipette Reagenz aus den Gefäßen entnehmen. Falls der Anwender mit einem Laborautomaten arbeitet, kann er den Grundkörper 1 mit den geöffneten Gefäßen 15.1 bis 15.4 in einen Laborautomat einsetzen. Bei geeigneter Bemessung der äußeren Ränder der Standfläche 8.1 kann der Anwender den Lagerkörper direkt auf einen Arbeitsplatz für Mikrotiterplatten des Laborautomaten positionieren. Bei dem Ausführungsbeispiel sind die äußeren Abmessungen der Standfläche größer als der Arbeitsplatz eines Laborautomaten.

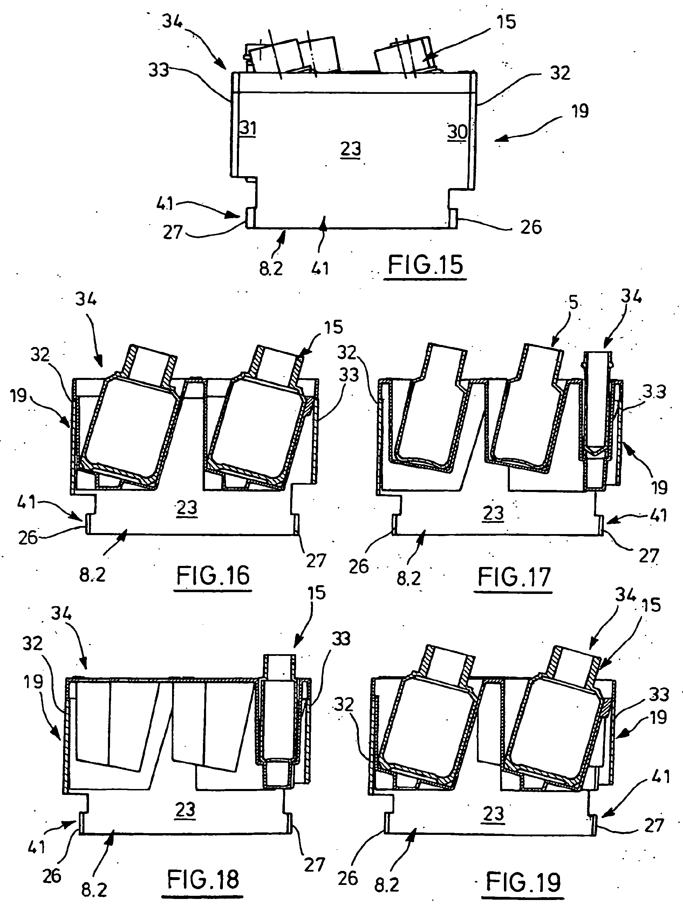

Deshalb kommt zum Positionieren des Grundkörpers 1 im Laborautomaten bevorzugt der Adapter 19 gemäß Fig. 14 bis 19 zum Einsatz. Der Adapter 19 hat ein im Wesentlichen kastenförmiges Gehäuse. Der Adapter 19 hat ein Unterteil 20, das mit einer Standfläche 8.2 auf einem Arbeitsplatz des Laborautomaten plazierbar ist und ein Oberteil 21, das den Grundkörper 1 aufnimmt. Die Standfläche 8.2 des Adapters 19 ist parallel zur Standfläche 8.1 des eingesetzten Grundkörpers 1.

Der Adapter 19 hat zwei einander gegenüberliegende Gehäusewände 22, 23, die sich über die gesamte Höhe des Unterteils 20 und des Oberteils 21 hinwegerstrecken. Im Bereich des Unterteils weisen diese Gehäusewände 22, 23 jeweils zwei senkrecht zur gegenüberliegenden Gehäusewand 23, 22 hin gerichtete, laschenförmige Gehäusewandabschnitte 24, 25, 26, 27 auf. Im Bereich des Oberteils 21 springen die beiden einander gegenüberliegenden Gehäusewände 22, 23 oberhalb der abgewinkelten Gehäusewandabschnitte 24 bis 27 in Randbereichen 28, 29, 30, 31 nach außen vor und sind an ihren seitlichen Rändern über weitere Gehäusewände 32, 33 miteinander verbunden. Die beiden Gehäusewände 22, 23 bilden die beiden kurzen Seiten des Adapters 19. Die beiden weiteren Gehäusewände 32, 33 bilden die langen Seiten des Adapters 19.

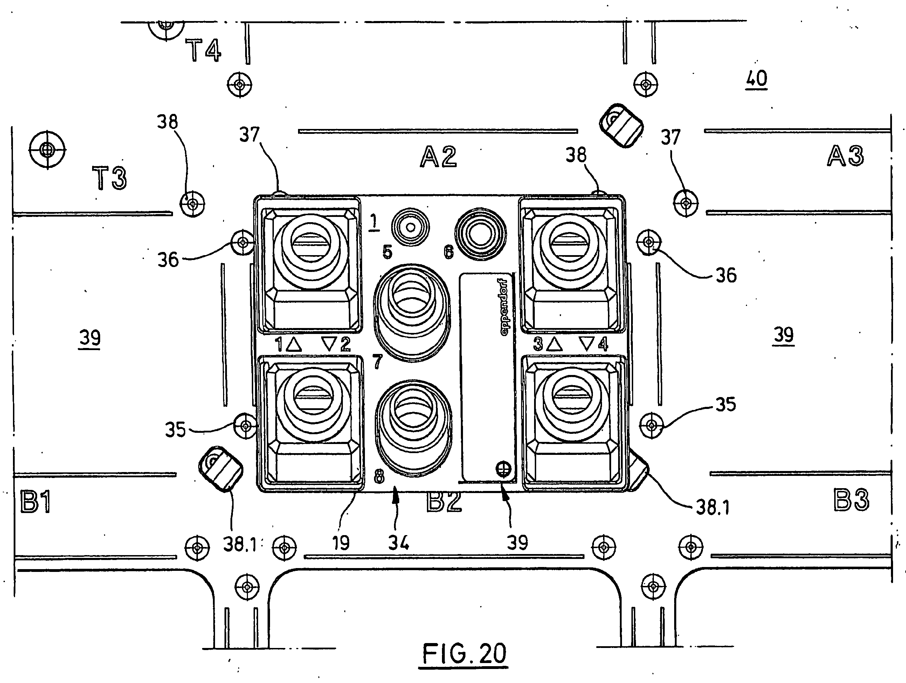

Gemäß Fig. 20 ist der von Grundkörper 1 und Adapter 19 gebildete Träger 34 mit den darin angeordneten, geöffneten Gefäßen 15 zwischen festen Stiften 35 bis 38 und einem beweglichen Stift 38.1 auf einem Arbeitsplatz 39 eines Laborautomaten 40 positioniert. Die äußeren unteren Ränder der Gehäusewände 22, 23 und der Gehäusewandabschnitte 24 bis 27 sind Positionierungsmittel 41, die sich an den Stiften 35 bis 38.1 ausrichten, die weitere Positionierungsmittel 42 sind.

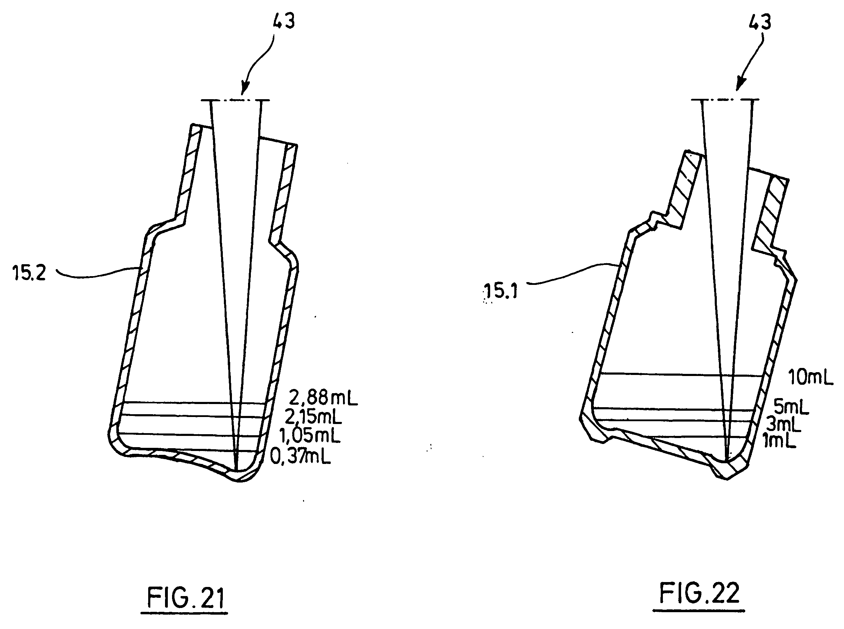

Die Fig. 21 zeigt das Gefäß 15.2 beim Entnehmen von Flüssigkeit mittels einer Pipettenspitze 43 einer Pipette. Aufgrund der geneigten Anordnung des Gefäßes 15.2 in der Aufnahme 4.2 des Trägers 34 kann das Reagenz nahezu vollständig entnommen werden. Lediglich geringe Restmengen können vom untersten Punkt des Gefäßes 15.2 nicht abgesogen werden.

Fig. 22 zeigt das Gefäß 15.2 beim Entnehmen von Flüssigkeit mittels einer Pipettenspitze 43. Aufgrund der Neigung des Gefäßes 15.2 bleiben auch in diesem Falle nur geringste Mengen Flüssigkeit im Gefäß zurück.

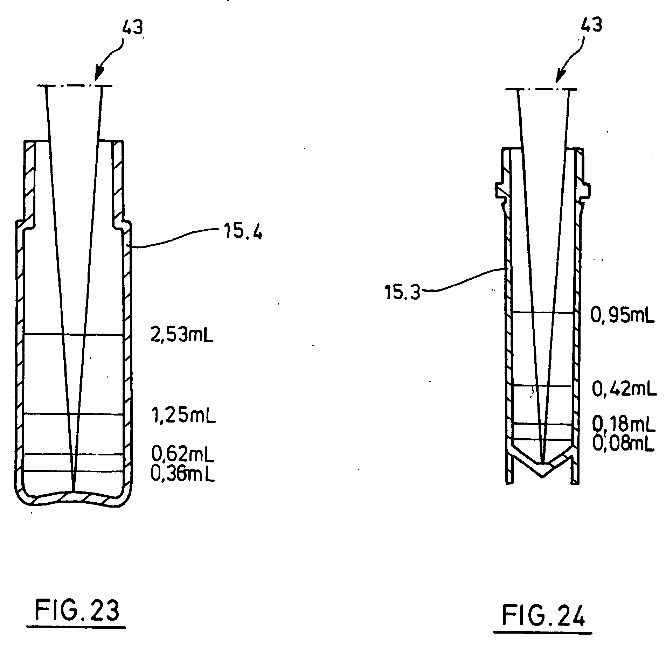

Fig. 23 zeigt das Gefäß 15.4 beim Entnehmen von Reagenz. In diesem Falle bleiben größere Reste zurück, da das Gefäß 15.4 annähernd vertikal ausgerichtet ist und der Gefäßboden nach oben ausgewölbt ist. Das Gefäß 15.4 ist deshalb für die Aufnahme kostengünstiger Reagenzien bestimmt.

Schließlich zeigt Fig. 24, dass das Gefäß 15.3 trotz vertikaler Ausrichtung weitgehend entleerbar ist, da der Gefäßboden nach unten gewölbt ist, so dass sich restliche Flüssigkeitsmengen im Zentrum des Gefäßbodens ansammeln. Das Gefäß 15.3 ist insbesondere für kostspielige Reagenzien bestimmt, die in nur sehr kleinen Mengen benötigt werden, so dass eine Pipettenspitze 43 bei einer Neigung des Gefäßes 15.3 zur Vertikalen nicht durch die Gefäßöffnung hindurchpassen würde.

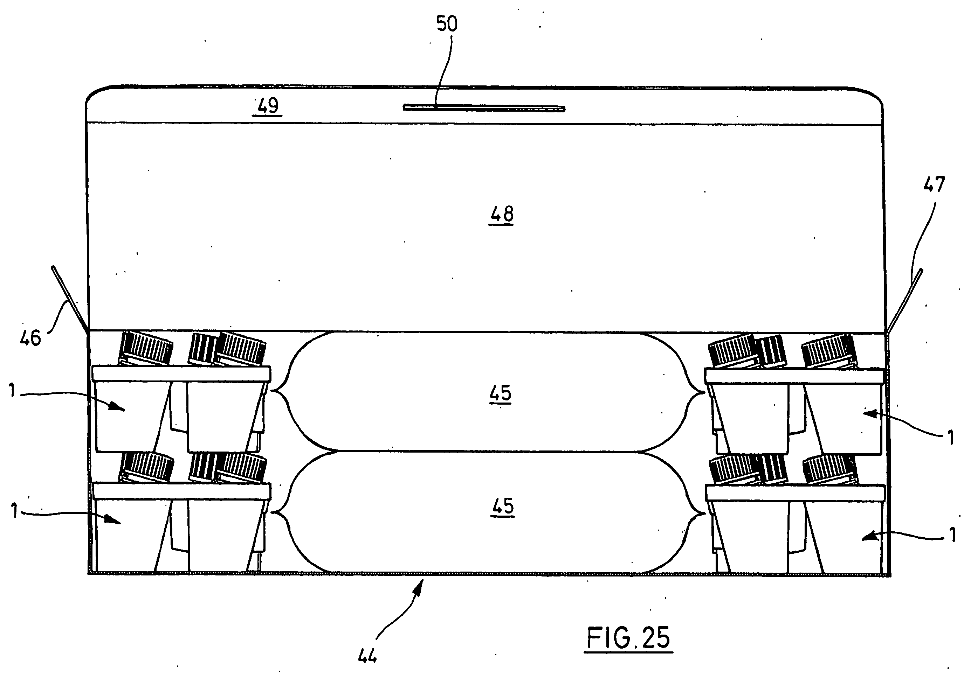

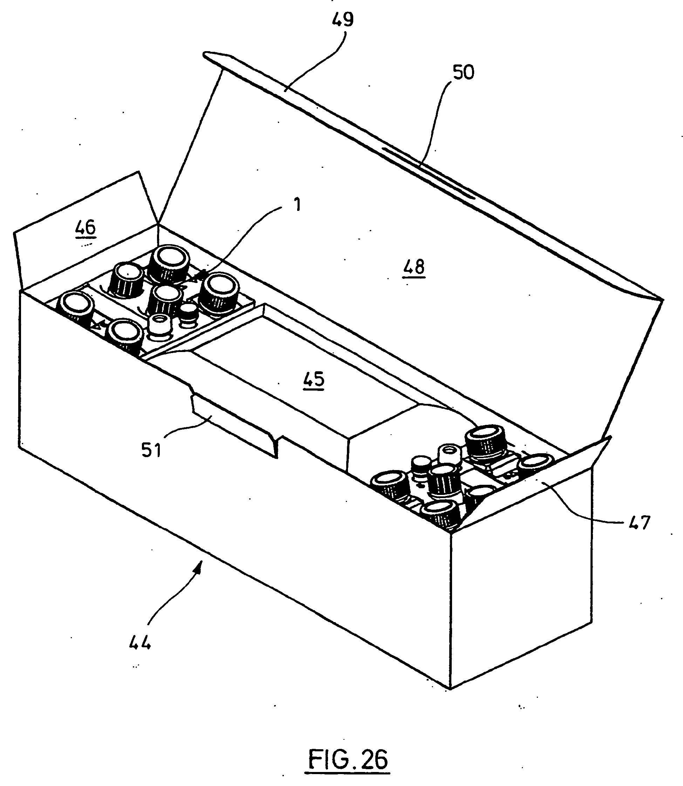

Gemäß Fig. 25 und 26 sind zwei übereinandergestapelte Grundkörper 1 mit gefüllten Gefäßen 15 darin in eine quaderförmigen Faltschachtel 44 aus Karton eingesetzt. Zwischen den beiden Stapeln sind mit leeren Reaktionsgefäßen befüllte Kunststoffbeutel 45 angeordnet. Die Faltschachtel 44 hat an den beiden schmalen oberen Rädern von Wänden Staublaschen 46, 47 und an einem langen oberen Rand einer Wand einen Deckel 48. Der Deckel 48 weist eine Schließlasche 49 mit einem Steckschlitz 50 für eine Verriegelungslasche 51 auf. Die Verriegelungslasche 51 ist am oberen Rand einer gegenüberliegenden Wand der Faltschachtel ausgebildet. Nach dem Einschwenken der Staublaschen 46, 47 kann der Deckel 48 zugeschwenkt werden. Die Schließlasche 49 wird hinter die gegenüberliegende Wand gesteckt. Danach kann durch Einstecken der Verriegelungslasche 51 in den Steckschlitz 50 der Deckel 48 in Schließstellung gesichert werden. Dann sind die bestückten Lagerkörper 1 vor Umgebungseinflüssen geschützt untergebracht

### Bezugszeichenliste:

- 1: Grundkörper
- 2: obere Wand
- 3, 3.1 bis 3.4: Behälter
- 4, 4.1 bis 4.4: Aufnahme
- 5, 5.1 bis 5.4: Boden
- 5.11 bis 5.13: Bodenabschnitt
- 5.31,5.32: Bodenabschnitt
- 5.41,5.42: Bodenabschnitt
- 6, 6.1 bis 6.4: Seitenwandabschnitt
- 6.11 bis 6.14: Seitenwandabschnitt
- 6.21 bis 6.24: Seitenwandabschnitt
- 6.31 bis 6.32: Seitenwandabschnitt
- 6.41 bis 6.42: Seitenwandabschnitt
- 7, 7.1 bis 7.4: obere Öffnung
- 8,8.1,8.2: Standfläche
- 9.1,9.2: Absatz
- 10: Einfassung
- 11: Abstandsbereich
- 12, 12.1 bis 12.4: Kennzeichnung
- 13: weitere Kennzeichnung
- 14: Loch
- 15,15.1 bis 15.4: Gefäß
- 16, 16.1 bis 16.4: Gefäßkörper
- 17, 17.1 bis 17.4: Gefäßdeckel
- 18: Etikett
- 19: Adapter
- 20: Unterteil
- 21: Oberteil
- 22,23: Gehäusewand
- 24 bis 27: Gehäusewandabschnitt
- 28 bis 31: Randbereich
- 32, 33: weitere Gehäusewand
- 34: Träger
- 35 bis 38.1: Stift
- 39: Arbeitsplatz
- 40: Laborautomat
- 41: Positionierungsmittel
- 42: weitere Positionierungsmittel
- 43: Pipettenspitze
- 44: Faltschachtel
- 45: Kunststoffbeutel
- 46,47: Staublasche
- 48: Deckel
- 49: Schließlasche
- 50: Steckschlitz
- 51: Verriegelungslasche

## Patentansprüche

1. Kit umfassend einen Träger (34) und auf dem Träger (34) angeordnete Gefäße (15), wobei in verschiedenen Gefäßen (15) verschiedene Reagenzien enthalten sind, der Träger (34) an der Unterseite eine Standfläche (8) zum Aufsetzen auf einen Untergrund aufweist und der Träger (34) unten Positionierungsmittel (41) zum Positionieren auf mindestens einem Arbeitsplatz (39) eines Laborautomaten (40) für Mikrotiterplatten gemäß dem SBS-Standard aufweist, die Gefäße (15) mit einem öffenbaren Verschluss (17) oben auf dem Träger (34) angeordnet und von Haltemitteln (4) des Trägers gehalten sind, wobei die Haltemittel (4) mindestens ein Gefäß (15) bei Anordnung des Trägers (34) mit der Standfläche (8) auf einem horizontalen Untergrund in einer zur Vertikalen geneigten Ausrichtung halten, sodass sich Restmengen einer Flüssigkeit in dem Gefäß am tiefsten Punkt des geneigten Gefäßbodens sammeln.

2. Kit nach Anspruch 1, bei dem die Positionierungsmittel (41) äußere Ränder einer Basis des Trägers (34) sind, deren Abmessungen den Abmessungen mindestens eines Arbeitsplatzes (39) eines Laborautomaten (40) für eine Mikrotiterplatte gemäß SBS-Standard entsprechen.

3. Kit nach Anspruch 1, bei dem die Haltemittel mindestens eine Aufnahme (4) des Trägers (34) umfassen, in der ein Gefäß (15) angeordnet ist, wobei in mindestens einer Aufnahme (4) das Gefäß (15) an mindestens einer Führungsfläche (5.12, 5.13, 5.2, 6.11, 6.21) anliegt, die so ausgerichtet ist, dass das Gefäß (15) bei Anordnung des Trägers (34) mit der Standfläche (8) auf einem horizontalen Untergrund zur Vertikalen geneigt ist.

4. Kit nach Anspruch 3, bei dem die Führungsfläche (5.12, 5.13, 5.2) ein Boden der Aufnahme ist, der schräg zur Standfläche (8) geneigt ist und auf dem das Gefäß (15) aufsitzt und/oder bei dem die Führungsfläche (6.11, 6.21) eine Scitenwand der Aufnahme (4) ist.

5. Kit nach Anspruch 4, bei dem das Gefäß (15) an einer oberen Öffnung (7) der Aufnahme (4) mit dem geneigten Boden (5) auf einer Seite an einem Seitenwandabschnitt (6.11, 6.21) der Aufnahme (4) anliegt und auf der gegenüberliegenden Seite nicht, so dass ein Betrachter durch die obere Öffnung (7) der Aufnahme hindurch eine Kennzeichnung auf der Seite des Gefäßes (15) betrachten kann.

6. Kit nach Anspruch 4 oder 5, bei dem sich der Querschnitt der Aufnahme (4) mit dem geneigten Boden (5.12, 5.13, 5.2) nach oben zu der oberen Öffnung (7) der Aufnahme (4) hin erweitert.

7. Kit nach einem der Ansprüche 4 bis 6, bei dem der Träger (34) eine obere Wand (2) und von der oberen Wand (2) nach unten vorstehende Behälter (3) aufweist, wobei in der oberen Wand (2) die oberen Öffnungen (7) und in den Behältern (3) die Aufnahmen (4) ausgebildet sind.

8. Kit nach Anspruch 7, bei dem die Standfläche (8) des Grundkörpers (1) an der Unterseite von Böden (5) der Aufnahmen ausgebildet ist.

9. Kit nach Anspruch 8, bei dem die Behälter (3) von der oberen Wand (2) unterschiedlich weit nach unten vorstehen und die am weitesten nach unten vorstehenden Behälter (3) mit der Unterseite ihrer Böden (5) die Standfläche (8.1) des Grundkörpers (1) bilden.

10. Kit nach einem der Ansprüche 4 bis 9, bei dem die Aufnahme (4) mit dem geneigten Boden (5) zwei voneinander beabstandete geneigte Bodenabschnitte (5.12, 5.13) und dazwischen einen mit der Unterseite einen Abschnitt der Standfläche (8.1) des Grundkörpers (1) bildenden Bodenabschnitt (5.11) aufweist.

11. Kit nach einem der Ansprüche 1 bis 10, bei dem der Träger (34) einen die Gefäße (15) tragenden Grundkörper (1) und einen den Grundkörper (1) haltenden Adapter (19) mit der Standfläche (8.2) an der Unterseite umfasst oder bei dem der Träger ein die Gefäße (15) tragender Grundkörper (1) mit der Standfläche (8.1) an der Unterseite ist.

12. Kit nach Anspruch 11, bei dem der Adapter (19) einen Rahmen mit der Standfläche an der Unterseite eines Unterteiles (20) und einem oberhalb des Unterteiles (20) seitlich auskragenden Oberteil (21) zur Aufnahme des Grundkörpers (1) aufweist und/oder bei dem der Grundkörper (1) ein Unterteil mit der Standfläche (8.2) an der Unterseite und einem oberhalb des Unterteils (20) seitlich auskragenden Oberteil (21) zur Aufnahme der Gefäße (15) aufweist.

13. Kit nach Anspruch 12, bei dem der Adapter (19) zwei ebene, einander gegenüberliegende Gehäusewände (22, 23) aufweist, die sich jeweils über die gesamte Höhe des Unterteils (20) und des Oberteils (21) hinweg erstrecken und bei dem der Adapter (19) im Bereich des Unterteils (20) an den beiden Rändern der Seitenwände (22, 23) jeweils zwei senkrecht zur gegenüberliegenden Seitenwand (23, 22) hin ausgerichtete Gehäusewandabschnitte (24 bis 27) aufweist und im Bereich des Oberteils (21) die beiden einander gegenüberliegenden Seitenwände (22, 23) oberhalb der abgewinkelten Gehäusewandabschnitte (24 bis 27) nach außen vorspringen und an ihren seitlichen Rändern über weitere Gehäusewände (32, 33) miteinander verbunden sind.

14. Kit nach einem der Ansprüche 1 bis 13, bei dem die Gefäße (15) auf einem Gefäßkörper (16) und/oder auf einem Gefäßdeckel (17) Kennzeichnungen aufweisen und auf einer oberen Wand (2) des Trägers (34) neben darin ausgebildeten oberen Öffnungen (7) der Aufnahmen (4) entsprechende Kennzeichnungen (12) angeordnet sind.

15. Kit nach einem der Ansprüche 1 bis 14, bei dem eine obere Wand (2) des Trägers (34) mindestens eine mittels eines Sensors abtastbare weitere Kennzeichnung (13) und/oder mindestens eine Fläche für eine Beschriftung und/oder ein Etikett (18) aufweist.

16. Kit nach einem der Ansprüche 1 bis 15, wobei der Träger (34) mit und ohne darauf angeordneten Gefäßen (15) an der Unterseite und an der Oberseite komplementär geformt ist, so dass mehrere Träger (34) mit und ohne darauf angeordneten Gefäßen (15) aufeinander stapelbar sind.

17. Kit nach einem der Ansprüche 1 bis 16, bei dem der Träger (34) mit einem Deckel versehen ist.

18. Kit nach einem der Ansprüche 1 bis 17 umfassend eine Umverpackung (44), in der mindestens ein Träger (34) mit darauf angeordneten Gefäßen (15) ohne oder mit Deckel angeordnet ist.

19. Kit nach Anspruch 18, umfassend mindestens einen Stapel aus Trägern (34) mit darauf angeordneten Gefäßen (15) und/oder einen Beutel (45) mit darin enthaltenen Reaktionsgefäßen.

20. Kit nach einem der Ansprüche 1 bis 19, bei dem der Grundkörper (1) aus mindestens einem Kunststoff spritzgegossen oder aus mindestens einem Kunststoff und/oder einem anderen Material tiefgezogen oder mechanisch gefertigt ist und/oder bei dem die Gefäße (15) aus mindestens einem Kunststoff spritzgegossen und/oder blasgeformt und/oder aus Glas hergestellt und/oder aus mindestens einem Kunststoff und/oder einem anderen Material tiefgezogen sind und/oder bei dem der Adapter (19) aus mindestens einem Kunststoff spritzgegossen oder aus mindestens einem Kunststoff oder einem anderen Material tiefgezogen oder mechanisch gefertigt ist und/oder bei dem der Deckel aus mindestens einem Kunststoff spritzgegossen oder aus mindestens einem Kunststoff oder einem anderen Material tiefgezogen oder mechanisch gefertigt ist und/oder bei dem die Umverpackung (44) eine Faltschachtel aus Karton und/oder aus Wellpappe ist.

21. Träger für einen Kit mit Gefäßen gemäß einem der Ansprüche 1 bis 20, wobei der Träger folgende Elemente aufweist:
(a) eine Standfläche (8) an der Unterseite zum Aufsetzen auf einen Untergrund;
(b) Positionierungsmittel (41) an seiner Unterseite zum Positionieren auf mindestens einem Arbeitsplatz (39) eines Laborautomaten (40) für Mikrotiterplatten gemäß dem SBS-Standard ; und
(c) Haltemittel (4) zum Halten von Gefäßen an der Oberseite, wobei die Haltemittel (4) mindestens ein Gefäß (15) bei Anordnung des Trägers (34) mit der Standfläche (8) auf einem horizontalen Untergrund in einer zur Vertikalen geneigten Ausrichtung halten, sodass sich Restmengen einer Flüssigkeit in dem Gefäß am tiefsten Punkt des geneigten Gefäßbodens sammeln.

22. Verwendung eines Trägers gemäß Anspruch 21 oder des Kits gemäß einem der Ansprüche 1 -20 in einem Laborautomaten zur Anordnung von Reagenzien.

## Claims

1. A kit comprising a carrier (34) and vessels (15) arranged on the carrier (34), wherein different reagents are contained in different vessels (15), the carrier (34) has a footprint (8) on the bottom side for being placed on a base, and the carrier (34) has bottom positioning means (41) for being positioned on at least one workplace (39) of an automated laboratory system (40) for microtiter plates according to the SBS standard, the vessels (15) with an openable closing device (17) are arranged on top of the carrier (34) and are held by retaining means (4) of the carrier, wherein the retaining means (4) hold at least one vessel (15) when the footprint (8) of the carrier (34) is arranged on a horizontal base aligned inclined towards the vertical, so that the residual amount of fluid collects at the lowest point of the inclined vessel bottom.

2. The kit according to claim 1, wherein the positioning means (41) are outer edges of a base of the carrier (34) that have dimensions which correspond to the dimensions of at least one workplace (39) of an automated laboratory system (40) for a microtiter plate according to the SBS standard.

3. The kit according to claim 1, wherein the retaining means comprise at least one seat (4) of the carrier (34) in which a vessel (15) is arranged, wherein the vessel (15) abuts at least one guide surface (5.12, 5.13, 5.2, 6.11, 6.21) in at least one seat (4) that is aligned so that the vessel (15) is inclined towards the vertical when the footprint (8) of the carrier (34) is arranged on a horizontal base.

4. The kit according to claim 3, wherein the guide surface (5.12, 5.13, 5.2) is a bottom of the seat that is inclined at an angle towards the footprint (8) and on which the vessel (15) rests, and/or wherein the guide surface (6.11, 6.21) is a side wall of the seat (4).

5. The kit according to claim 4, wherein the vessel (15) abuts a top opening (7) of the seat (4) with the inclined bottom (5) on one side at a side wall section (6.11, 6.21) of the seat (4) and not on the opposite side so that a viewer can observe an ID on the side of the vessel (15) through the top opening (7) in the seat.

6. The kit according to claim 4 or 5, wherein the cross-section of the seat (4) with the inclined bottom (5.12, 5.13, 5.2) expands upwards to the top opening (7) in the seat (4).

7. The kit according to one of claims 4 to 6, wherein the carrier (34) has a top wall (2) and containers (3) that project downward from the top wall (2), wherein the top openings (7) are formed in the top wall (2), and the seats (4) are formed in the containers (3).

8. The kit according to claim 7, wherein the footprint (8) of the main body (1) is formed on the bottom side of the bottoms (5) of the seats.

9. The kit according to claim 8, wherein the containers (3) project downward from the top wall (2) to different lengths, and the bottom side of the bottoms (5) of the containers (3) projecting furthest downward form the footprint (8.1) of the main body (1).

10. The kit according to one of claims 4 to 9, wherein the seat (4) with the inclined bottom (5) has two inclined bottom sections (5.12, 5.13) at a distance from each other, and a bottom section (5.11) therebetween forming with the bottom side a section of the footprint (8.1) of the main body (1).

11. The kit according to one of claims 1 to 10, wherein the carrier (34) comprises a main body (1) carrying the vessels (15) and an adapter (19) holding the main body (1) with the footprint (8.2) on the bottom side, or wherein the carrier is a main body (1) carrying the vessels (15) with the footprint (8.1) on the bottom side.

12. The kit according to claim 11, wherein the adapter (19) has a frame with the footprint on the bottom side of a bottom part (20) and a top part (21) that protrudes laterally above the bottom part (20) to receive the main body (1), and/or wherein the main body (1) has a bottom part with the footprint (8.2) on the bottom side and a top part (21) that protrudes laterally above the bottom part (20) to receive the vessels (15).

13. The kit according to claim 12, wherein the adapter (19) has two flat, opposing housing walls (22, 23) that in each case extend over the entire height of the bottom part (20) and top part (21), and wherein the adapter (19) in each case has two housing wall sections (24 to 27) aligned perpendicular to the opposing side wall (23, 22) in the region of the bottom part (20) at the two edges of the side walls (22, 23), and in the region of the top part (21), the two opposing side walls (22, 23) are connected to each other at their side edges by additional housing walls (32, 33) while projecting outward above the angled housing wall sections (24 to 27).

14. The kit according to one of claims 1 to 13, wherein the vessels (15) have IDs on a vessel body (16) and/or on a vessel cover (17), and corresponding IDs (12) are arranged on a top wall (2) of the carrier (34) next to top openings (7) of the seats (4) formed therein.

15. The kit according to one of claims 1 to 14, wherein a top wall (2) of the carrier (34) has at least one additional ID (13) that can be scanned by means of a sensor, and/or at least one surface for writing and/or a label (18).

16. The kit according to one of claims, 1 to 15, wherein the carrier (34) is shaped in a complementary manner on the bottom side and on the top side with and without vessels (15) arranged thereupon such that a plurality of carriers (34) can be stacked upon each other with and without vessels (15) arranged thereupon.

17. The kit according to one of claims 1 to 16, wherein the carrier (34) is provided with a cover.

18. The kit according to one of claims 1 to 17, comprising an external packaging (44) in which at least one carrier (34) is arranged with vessels (15) arranged thereupon with or without covers.

19. The kit according to claim 18, comprising at least one stack of carriers (34) with vessels (15) arranged thereupon and/or a bag (45) with reaction vessels contained therein.

20. The kit according to one of claims 1 to 19, wherein the main body (1) is manufactured from at least one injection-molded plastic, or at least one plastic and/or another material that is deep-drawn or mechanically produced, and/or wherein the vessels (15) are made of at least one injection-molded plastic and/or blow-molded and/or are made of glass, and/or are made of at least one deep-drawn plastic and/or another material, and/or wherein the adapter (19) is made of at least one injection-molded plastic, or at least one plastic or another material that is deep-drawn or mechanically produced, and/or wherein the cover is made of at least one injection-molded plastic or at least one deep-drawn or mechanically produced plastic or another material, and/or wherein the external packaging (44) is a folding box made of cardboard and/or corrugated cardboard.

21. A carrier for a kit with vessels according to one of claims 1 to 20, wherein the carrier comprises the following elements:
(a) a footprint (8) on the bottom side for being placed on a base;
(b) positioning means (41) on its bottom side for being positioned on at least one workplace (39) of an automated laboratory system (40) for microtiter plates according to the SBS standard; and
(c) retaining means (4) for holding vessels on the top side, wherein the retaining means (4) hold at least one vessel (15) when the footprint (8) of the carrier (34) is arranged on a horizontal base and aligned inclined towards the vertical, so that the residual amount of fluid collects at the lowest point of the inclined vessel bottom.

22. A use of a carrier according to claim 21 or the kit according to one of claims 1-20 in an automated laboratory system for arranging reagents.

## Revendications

1. Kit, comprenant un support (34) et des récipients (15) disposés sur le support (34), différents réactifs étant contenus dans différents récipients (15), le support (34) présentant sur le côté inférieur une surface d'appui (8) pour la pose sur une assise, et le support (34) présentant en bas des moyens de positionnement (41) pour le positionnement sur au moins un emplacement de travail (39) d'un automate de laboratoire (40) pour plaques microtitres selon le standard SBS, les récipients (15) étant disposés, avec une fermeture (17) pouvant être ouverte, en haut sur le support (34) et étant retenus par des moyens de retenue (4) du support, les moyens de retenue (4) maintenant dans une orientation inclinée par rapport à la verticale au moins un récipient (15) lors de l'agencement du support (34) avec la surface d'appui (8) sur une assise horizontale de telle sorte que des quantités résiduelles d'un liquide dans le récipient s'accumulent au point le plus profond du fond de récipient incliné.

2. Kit selon la revendication 1, dans lequel les moyens de positionnement (41) sont des bords extérieurs d'une base du support (34) dont les dimensions correspondent aux dimensions d'au moins un emplacement de travail (39) d'un automate de laboratoire (40) pour une plaque microtitre selon le standard SBS.

3. Kit selon la revendication 1, dans lequel les moyens de retenue comprennent au moins un logement (4) du support (34) dans lequel est disposé un récipient (15), le récipient (15) étant, dans au moins un logement (4), adjacent à au moins une surface de guidage (5.12, 5.13, 5.2, 6.11, 6.21) qui est orientée de telle sorte que, lors de l'agencement du support (34) avec la surface d'appui (8) sur une assise horizontale, le récipient (15) est incliné par rapport à la verticale.

4. Kit selon la revendication 3, dans lequel la surface de guidage (5.12, 5.13, 5.2) est un fond du logement qui est incliné de façon oblique par rapport à la surface d'appui (8) et sur lequel repose le récipient (15), et/ou dans lequel la surface de guidage (6.11 , 6.21) est une paroi latérale du logement (4).

5. Kit selon la revendication 4, dans lequel le récipient (15), sur une ouverture (7) supérieure du logement (4) avec le fond (5) incliné, est adjacent, sur un côté, à un tronçon de paroi latérale (6.11 , 6.21) du logement (4) et n'est pas adjacent sur le côté opposé de telle sorte qu'un observateur peut, à travers l'ouverture (7) supérieure du logement, observer un signe distinctif sur le côté du récipient (15).

6. Kit selon la revendication 4 ou 5, dans lequel la section transversale du logement (4) avec le fond incliné (5.12, 5.13, 5.2) s'élargit vers le haut en direction de l'ouverture supérieure (7) du logement (4).

7. Kit selon l'une des revendications 4 à 6, dans lequel le support (34) présente une paroi supérieure (2) et des réservoirs (3) faisant saillie vers le bas à partir de la paroi supérieure (2), les ouvertures supérieures (7) étant constituées dans la paroi supérieure (2) et les logements (4) étant constitués dans les réservoirs (3).

8. Kit selon la revendication 7, dans lequel la surface d'appui (8) du corps de base (1) est constituée sur le côté inférieur de fonds (5) des logements.

9. Kit selon la revendication 8, dans lequel les récipients (3) font saillie à partir de la paroi supérieure (2) vers le bas sur des distances différentes, et dans lequel les récipients (3) faisant saillie le plus loin vers le bas forment avec le côté inférieur de leurs fonds (5) la surface d'appui (8.1) du corps de base (1).

10. Kit selon l'une des revendications 4 à 9, dans lequel le logement (4) avec le fond (5) incliné présente des tronçons de fond (5.12, 5.13) inclinés espacés entre eux et, en position intermédiaire, un tronçon de fond (5.11) formant avec le côté inférieur un tronçon de la surface d'appui (8.1) du corps de base (1).

11. Kit selon l'une des revendications 1 à 10, dans lequel le support (34) comprend un corps de base (1) portant les récipients (15) et un adaptateur (19) retenant le corps de base (1) avec la surface d'appui (8.2) sur le côté inférieur, ou dans lequel le support est un corps de base (1) portant les récipients (15) avec la surface d'appui (8.1) sur le côté inférieur.

12. Kit selon la revendication 11, dans lequel l'adaptateur (19) présente un cadre avec la surface d'appui sur le côté inférieur d'une partie inférieure (20) et avec une partie supérieure (21) en porte-à-faux latéralement au-dessus de la partie inférieure (20) pour la réception du corps de base (1), et/ou dans lequel le corps de base (1) présente une partie inférieure avec la surface d'appui (8.2) sur le côté inférieur et avec une partie supérieure (21) en porte-à-faux latéralement au-dessus de la partie inférieure (20) pour la réception des récipients (15).

13. Kit selon la revendication 12, dans lequel l'adaptateur (19) présente deux parois de boîtier (22, 23) planes opposées qui s'étendent respectivement sur toute la hauteur de la partie inférieure (20) et de la partie supérieure (21), et dans lequel l'adaptateur (19), dans la zone de la partie inférieure (20), sur les deux bords des parois de boîtier (22, 23), présente respectivement deux tronçons de paroi de boîtier (24 à 27) orientés perpendiculairement à la paroi de boîtier (23, 22) opposée et, dans la zone de la partie supérieure (21), les deux parois latérales (22, 23) opposées dépassent vers l'extérieur au-dessus des tronçons de paroi de boîtier (24 à 27) coudés et sont raccordées l'une à l'autre sur leurs bords latéraux par le biais d'autres parois de boîtier (32, 33).

14. Kit selon l'une des revendications 1 à 13, dans lequel les récipients (15) présentent des signes distinctifs sur un corps de récipient (16) et/ou sur un couvercle de récipient (17), et dans lequel des signes distinctifs (12) correspondants sont disposés sur une paroi supérieure (2) du support (34) près d'ouvertures (7) supérieures des logements (4) qui y sont constituées.

15. Kit selon l'une des revendications 1 à 14, dans lequel une paroi supérieure (2) du support (34) présente au moins un autre signe distinctif (13) pouvant être exploré au moyen d'un capteur et/ou au moins une surface pour une inscription et/ou une étiquette (18).

16. Kit selon l'une des revendications 1 à 15, dans lequel le support (34) avec ou sans récipients (15) disposés dessus est formé de façon complémentaire sur le côté inférieur et sur le côté supérieure de telle sorte que plusieurs supports (34) avec et sans récipients (15) disposés dessus peuvent être empilés les uns sur les autres.

17. Kit selon l'une des revendications 1 à 16, dans lequel le support (34) est muni d'un couvercle.

18. Kit selon l'une des revendications 1 à 17, comprenant un suremballage (44) dans lequel est disposé au moins un support (34) avec des récipients (15) qui sont disposés dessus sans ou avec couvercle.

19. Kit selon la revendication 18, comprenant au moins une pile de supports (34) avec des récipients (15) disposés dessus, et/ou un sachet (45) avec des récipients de réaction qui y sont contenus.

20. Kit selon l'une des revendications 1 à 19, dans lequel le corps de base (1) est moulé par injection à partir d'au moins une matière plastique ou est embouti à partir d'au moins une matière plastique et/ou d'un autre matériau ou est fabriqué mécaniquement, et/ou dans lequel les récipients (15) sont moulés par injection à partir d'au moins une matière plastique et/ou moulés par soufflage et/ou réalisés en verrue et/ou emboutis à partir d'au moins une matière plastique et/ou d'un autre matériau, et/ou dans lequel l'adaptateur (19) est moulé par injection à partir d'au moins une matière plastique ou est embouti à partir d'au moins une matière plastique ou d'un autre matériau ou est fabriqué mécaniquement, et/ou dans lequel le couvercle est moulé par injection à partir d'au moins une matière plastique ou est embouti à partir d'au moins une matière plastique ou d'un autre matériau ou est fabriqué mécaniquement, et/ou dans lequel le suremballage (44) est une boîte pliable en carton et/ou en papier ondulée.

21. Support pour un kit avec des récipients selon l'une des revendications 1 à 20, le support présentant les éléments suivants :
(a) une surface d'appui (8) sur le côté inférieur pour la pose sur une assise ;
(b) des moyens de positionnement (41) sur son côté inférieur pour le positionnement sur au moins un emplacement de travail (39) d'un automate de laboratoire (40) pour des plaques microtitres selon le standard SBS ; et
(c) des moyens de retenue (4) pour la retenue de récipients sur le côté supérieur, les moyens de retenue (4) retenant au moins un récipient (15) dans une orientation inclinée par rapport à la verticale lors de l'agencement du support (34) avec la surface d'appui (8) sur une assise horizontale de telle sorte que des quantités résiduelles d'un liquide dans le récipient s'accumulent au point le plus profond du fond de récipient incliné.

22. Utilisation d'un support selon la revendication 21 ou du kit selon l'une des revendications 1-20 dans un automate de laboratoire pour l'agencement de réactifs.
